# EUROPEAN PATENT APPLICATION

(11) **EP 4 668 826 A1**
(43) Date of publication of application: **24.12.2025**
(21) Application number: 24755829.9
(22) Date of filing: 05.01.2024
(51) Int. Cl.: H04W 24/02

(54) **SENSING CONFIGURATION METHOD, SENSING RESULT ACQUISITION METHOD AND APPARATUS AND STORAGE MEDIUM**

(30) Priority: 14.02.2023 CN 202310146253
(71) Applicant: Datang Mobile Communications Equipment Co., Ltd., Beijing 100085 (CN)
(72) Inventor: CAI, Yu, Beijing 100085 (CN)
(74) Representative: Studio Torta S.p.A.
(86) International application number: PCT/CN2024/070752
(87) International publication number: WO 2024/169453

(57) **Abstract**

A sensing configuration method, a sensing result obtaining method and device and a storage medium. The sensing configuration method includes: transmitting first information to a first network device. The first information is used to instruct transmission of sensing signal configuration information corresponding to a first device to the first device, and the first device includes a transmitter and/or receiver of a sensing signal.

## Description

### CROSS-REFERENCE TO RELATED APPLICATION

The present application is filed based on and claims the priority of Chinese Application No. 202310146253.9 filed on February 14, 2023, entitled "sensing configuration method, sensing result obtaining method and device and storage medium", the disclosure of which are incorporated in their entireties by reference herein.

### TECHNICAL FIELD

The present disclosure relates to the field of communication technologies, and in particular, to a hybrid automatic repeat request (HARQ) process processing method, device and storage medium.

### BACKGROUND

Communication-sensing convergence (hereinafter referred to as CS convergence, or alternatively as integrated communication and sensing) refers to a technical approach that achieves unified design of communication and sensing through means such as joint air interface and protocol design, time-frequency-spatial resource multiplexing and shared hardware devices. This enables wireless networks to support sensing and communication simultaneously, thereby enhancing overall network performance and service capabilities. The sensing functionality include localization, distance measurement, speed/velocity measurement, imaging, detection, recognition, environment reconstruction, and other related capabilities. Services based on the sensing functionality can be applied across various fields, including intelligent transportation, unmanned aerial vehicle (UAV) regulation, smart homes, public safety, health monitoring, and environmental monitoring.

In related art, when introducing a sensing function (SF) into a 5G network supporting integrated communication and sensing, the sensing function can either be a standalone network function or merged with other network functions (e.g., location management function (LMF), access and mobility management function (AMF)) into a single network function. The SF can implement basic sensing-related functions such as sensing control, sensing data processing, and sensing authorization. A base station and user equipment (UE) in the network need to perform transmission and/or reception of radio signals. Based on the reception of radio signals, the base station or UE can obtain sensing measurement data. Sensing information can be obtained based on the sensing measurement data.

### SUMMARY

Embodiments of the present disclosure provide a sensing configuration method, device and readable storage medium, which can solve the problem of complex sensing signal configuration processes and high signaling transmission overhead.

In a first aspect, one embodiment of the present disclosure provides a sensing configuration method, applied to a first network function, including:
transmitting first information to a first network device; wherein the first information is used to instruct transmission of sensing signal configuration information corresponding to a first device to the first device, and the first device includes a transmitter and/or receiver of a sensing signal.

Optionally, wherein the first information is identification information of the first device.

Optionally, the transmitting first information to a first network device, includes:
transmitting a first message to the first network device; wherein the first message is used to instruct the first network device to determine the sensing signal configuration information, and the first message includes the first information.

Optionally, the method further includes:
receiving second information or third information transmitted by the first network device; wherein the second information is used to indicate that the first network device successfully configures the sensing signal for the first device, the third information is used to indicate that the first network device fails to configure the sensing signal for the first device.

Optionally, the method further includes:
receiving the sensing signal configuration information or fourth information transmitted by the first network device; wherein the fourth information is used to indicate that the first network device fails to determine the sensing signal configuration information.

Optionally, the first device is one of the transmitter and the receiver, and the method further includes:
transmitting sensing signal configuration information corresponding to a second device to the second device, wherein the second device is the other of the transmitter and the receiver.

Optionally, the method further includes:
receiving fifth information or sixth information transmitted by the second device; wherein the fifth information is used to indicate that the sensing signal configuration for the second device is successful, and the sixth information is used to indicate that the sensing signal configuration for the second device fails.

In a second aspect, one embodiment of the present disclosure provides sensing configuration method, applied to a first network device, including:
receiving first information transmitted by a first network function; wherein the first information is used to instruct transmission of sensing signal configuration information corresponding to a first device to the first device, and the first device includes a transmitter and/or receiver of the sensing signal;
transmitting corresponding sensing signal configuration information to the first device according to the first information;

Optionally, the first information is identification information of the first device.

Optionally, the receiving first information transmitted by a first network function, includes:
receiving a first message transmitted by the first network function, wherein the first message is used to instruct the first network device to determine sensing signal configuration information, and the first message includes the first information;
wherein the method further includes:
determining the sensing signal configuration information according to the first message.

Optionally, the method further includes:
determining the sensing signal configuration information according to the first information.

Optionally, the method further includes:
receiving seventh information transmitted by the first device, and transmitting second information to the first network function; where the seventh information is used to indicate that the sensing signal configuration for the first device is successful, and the second information is used to indicate that the first network device successfully configures the sensing signal for the first device;
   or,
receiving eighth information transmitted by the first device, and transmitting third information to the first network function; where the eighth information is used to indicate that the sensing signal configuration for the first device is failed, and the third information is used to indicate that the first network device fails to configure the sensing signal for the first device.

Optionally, the method further includes:
when failing to determining the sensing signal configuration information, transmitting fourth information to the first network function, where the fourth information is used to indicate that the first network device fails to determine the sensing signal configuration information;
when the sensing signal configuration information is successfully determined, transmitting the sensing signal configuration information to the first network function.

Optionally, the first device is one of the transmitter and the receiver, and the method further includes:
transmitting sensing signal configuration information corresponding to a second device to the first device, where the second device is the other of the transmitter and the receiver;
receiving ninth information transmitted by the first device, and transmitting tenth information to the first network function; where the ninth information is used to indicate that the sensing signal configuration for the second device is successful, and the tenth information is used to indicate that the first network device successfully configures the sensing signal to the second device; or, receiving eleventh information transmitted by the first device, and transmitting twelfth information to the first network function, where the eleventh information is used to indicate that the sensing signal configuration for the second device is failed, and the twelfth information is used to indicate that the first network device fails to configure the sensing signal for the second device.

In a third aspect, one embodiment of the present disclosure provides a sensing configuration method applied to a first device which is one of a transmitter and a receiver of a sensing signal, including:
receiving sensing signal configuration information corresponding to the first device transmitted by a first network device, where the sensing signal configuration information corresponding to the first device is transmitted by the first network device according to first information transmitted by a first network function;
configuring a sensing signal according to the sensing signal configuration information corresponding to the first device.

Optionally, the method further includes:
transmitting seventh information or eighth information to the first network device, where the seventh information is used to indicate that the sensing signal configuration for the first device is successful, and the eighth information is used to indicate that the sensing signal configuration for the first device is failed.

Optionally, the method further includes:
receiving sensing signal configuration information corresponding to a second device transmitted by the first network device, where the second device is the other of the transmitter and the receiver;
transmitting the sensing signal configuration information corresponding to the second device to the second device;
receiving ninth information transmitted by the second device, and transmitting the ninth information to the first network device; where the ninth information is used to indicate that the sensing signal configuration for the second device is successful; or, receiving the eleventh information transmitted by the second device, and forwarding the eleventh information to the first network device, where the eleventh information is used to indicate that the sensing signal configuration for the second device is failed.

In a fourth aspect, one embodiment of the present disclosure provides a sensing configuration device, applied to a first network function, including: a memory, a transceiver, and a processor;
wherein the memory is used to store a computer program; the transceiver is used to transmit and receive data under the control of the processor; and the processor is used to read the computer program in the memory and perform the following operations:
transmitting first information to a first network device; wherein the first information is used to instruct transmission of sensing signal configuration information corresponding to a first device to the first device, and the first device includes a transmitter and/or receiver of a sensing signal.

In a fifth aspect, one embodiment of the present disclosure provides a sensing configuration device, applied to a first network function, including:
a first transmission unit used to transmit first information to a first network device; wherein the first information is used to instruct transmission of sensing signal configuration information corresponding to a first device to the first device, and the first device includes a transmitter and/or receiver of a sensing signal.

In a sixth aspect, one embodiment of the present disclosure provides a sensing configuration device, applied to a first network device, comprising: a memory, a transceiver, and a processor;
wherein the memory is used to store a computer program; the transceiver is used to transmit and receive data under the control of the processor; and the processor is used to read the computer program in the memory and perform the following operations:
receiving first information transmitted by a first network function; wherein the first information is used to instruct transmission of sensing signal configuration information corresponding to a first device to the first device, and the first device includes a transmitter and/or receiver of the sensing signal;
transmitting corresponding sensing signal configuration information to the first device according to the first information.

In a seventh aspect, one embodiment of the present disclosure provides a sensing configuration device, applied to a first network device, including:
a first receiving unit used to receive first information transmitted by a first network function; wherein the first information is used to instruct transmission of sensing signal configuration information corresponding to a first device to the first device, and the first device includes a transmitter and/or receiver of the sensing signal;
a first transmission unit used to transmit corresponding sensing signal configuration information to the first device according to the first information.

In an eighth aspect, one embodiment of the present disclosure provides a sensing configuration device applied to a first device which is one of a transmitter and a receiver of a sensing signal, including: a memory, a transceiver, and a processor;
wherein the memory is used to store a computer program; the transceiver is used to transmit and receive data under the control of the processor; and the processor is used to read the computer program in the memory and perform the following operations:
receiving sensing signal configuration information corresponding to the first device transmitted by a first network device, where the sensing signal configuration information corresponding to the first device is transmitted by the first network device according to first information transmitted by a first network function;
configuring a sensing signal according to the sensing signal configuration information corresponding to the first device.

In a ninth aspect, one embodiment of the present disclosure provides a sensing configuration device applied to a first device which is one of a transmitter and a receiver of a sensing signal, comprising:
a first receiving unit used to receive sensing signal configuration information corresponding to the first device transmitted by a first network device, where the sensing signal configuration information corresponding to the first device is transmitted by the first network device according to first information transmitted by a first network function;
a first configuration unit used to configure a sensing signal according to the sensing signal configuration information corresponding to the first device.

In a tenth aspect, one embodiment of the present disclosure provides a processor-readable storage medium storing a computer program, wherein the computer program causes a processor to execute the method according to the first aspect to the third aspect.

In an eleventh aspect, one embodiment of the present disclosure provides a sensing result obtaining method applied to a first network function, including:
receiving second sensing data transmitted by a first device; wherein the second sensing data is determined by the first device based on information of a transmitter of a sensing signal and first sensing data obtained by a receiver of the sensing signal, and the first device is one of the transmitter and the receiver of the sensing signal.

Optionally, before receiving the second sensing data transmitted by the first device, the method further includes:
transmitting first information to the first device, wherein the first information is used to request the second sensing data.

Optionally, the first device is the receiver, and the method further includes:
transmitting second information to the second device, where the second information is used to instruct the second device to transmit the information of the transmitter to the first device.

Optionally, the first device is the transmitter, and the method further includes:
transmitting a third message to the second device, where the third message is used to instruct the second device to transmit the first sensing data to the first device.

In a twelfth aspect, one embodiment of the present disclosure provides a sensing result obtaining method applied to a first network function, including:
receiving information of a transmitter of a sensing signal, transmitted by the transmitter;
receiving first sensing data transmitted by a receiver of the sensing signal;
determining second sensing data according to the information of the transmitter and the first sensing data.

Optionally, before receiving the information of the transmitter of the sensing signal, transmitted by the transmitter, the method further includes: transmitting fourth information to the transmitter of the sensing signal, where the fourth information is used to request information of the transmitter;
before receiving the first sensing data transmitted by the receiver of the sensing signal, the method further includes: transmitting fifth information to the receiver of the sensing signal, where the fifth information is used to request the first sensing data.

In a thirteenth aspect, one embodiment of the present disclosure provides a sensing result obtaining method applied to a transmitter of a sensing signal, including:
transmitting information of a transmitter to a first object, wherein the first object is a first network function or a receiver of a sensing signal.

Optionally, before transmitting the information of the transmitter to the first object, the method further includes:
receiving sixth information transmitted by the first object, where the sixth information is used to request information of the transmitter.

Optionally, the first object is the receiver, and before transmitting the information of the transmitter to the first object, the method further includes:
receiving seventh information transmitted by the first network function, wherein the seventh information is used to instruct transmission of the information of the transmitter to the receiver.

In a fourteenth aspect, one embodiment of the present disclosure provides a sensing result obtaining method applied to a transmitter of a sensing signal, including:
receiving first sensing data transmitted by a receiver of a sensing signal;
determining second sensing data based on the first sensing data and information of the transmitter;
transmitting the second sensing data to a first network function.

Optionally, before transmitting the second sensing data to the first network function, the method further includes:
receiving first information transmitted by the first network function, wherein the first information is used to request the second sensing data.

Optionally, before receiving first sensing data transmitted by the receiver of the sensing signal, the method further includes:
transmitting seventh information to the receiver of the sensing signal, wherein the seventh information is used to request the first sensing data.

In a fifteenth aspect, one embodiment of the present disclosure provides a sensing result obtaining method applied to a receiver of a sensing signal, including:
receiving information of a transmitter of a sensing signal transmitted by the transmitter;
determining second sensing data based on the first sensing data obtained by the receiver and the information of the transmitter;
transmitting the second sensing data to the first network function.

Optionally, before transmitting the second sensing data to the first network function, the method further includes:
receiving first information transmitted by the first network function, wherein the first information is used to request the second sensing data.

Optionally, before receiving information of the transmitter of the sensing signal transmitted by the transmitter, the method further includes:
transmitting sixth information to the transmitter of the sensing signal, wherein the sixth information is used to request information of the transmitter of the sensing signal.

In a sixteenth aspect, one embodiment of the present disclosure provides a sensing result obtaining method applied to a receiver of a sensing signal, including:
transmitting first sensing data obtained by the receiver to a transmitter of the sensing signal.

Optionally, before transmitting first sensing data obtained by the receiver to a transmitter of the sensing signal, the method further includes:
receiving seventh information transmitted by the transmitter, wherein the seventh information is used to request the first sensing data.

Optionally, before transmitting first sensing data obtained by the receiver to a transmitter of the sensing signal, the method further includes:
receiving third information transmitted by the first network function, where the third information is used to instruct the receiver to transmit the first sensing data to the transmitter.

In a seventeenth aspect, one embodiment of the present disclosure provides a sensing result obtaining device, applied to a first network function, including: a memory, a transceiver, and a processor;
wherein the memory is used to store a computer program; the transceiver is used to transmit and receive data under the control of the processor; and the processor is used to read the computer program in the memory and perform the following operations:
receiving second sensing data transmitted by a first device; wherein the second sensing data is determined by the first device based on information of a transmitter of a sensing signal and first sensing data obtained by a receiver of the sensing signal, and the first device is one of the transmitter and the receiver of the sensing signal.

In an eighteenth aspect, one embodiment of the present disclosure provides a sensing result obtaining device applied to a first network function, including:
a first receiving unit used to receive second sensing data transmitted by a first device; wherein the second sensing data is determined by the first device based on information of a transmitter of a sensing signal and first sensing data obtained by a receiver of the sensing signal, and the first device is one of the transmitter and the receiver of the sensing signal.

In a nineteenth aspect, one embodiment of the present disclosure provides a sensing result obtaining device applied to a first network function, comprising: a memory, a transceiver, and a processor;
wherein the memory is used to store a computer program; the transceiver is used to transmit and receive data under the control of the processor; and the processor is used to read the computer program in the memory and perform the following operations:
receiving information of a transmitter of a sensing signal, transmitted by the transmitter;
receiving first sensing data transmitted by a receiver of the sensing signal;
determining second sensing data according to the information of the transmitter and the first sensing data.

In a twentieth aspect, one embodiment of the present disclosure provides a sensing result obtaining device applied to a first network function, including:
a first receiving unit used to receive information of a transmitter of a sensing signal, transmitted by the transmitter;
a second receiving unit used to receive first sensing data transmitted by a receiver of the sensing signal;
a first determining unit used to determine second sensing data according to the information of the transmitter and the first sensing data.

In a twenty-first aspect, one embodiment of the present disclosure provides a sensing result obtaining method applied to a transmitter of a sensing signal, comprising: a memory, a transceiver, and a processor;
wherein the memory is used to store a computer program; the transceiver is used to transmit and receive data under the control of the processor; and the processor is used to read the computer program in the memory and perform the following operations:
transmitting information of a transmitter to a first object, wherein the first object is a first network function or a receiver of a sensing signal.

In a twenty-second aspect, one embodiment of the present disclosure provides a sensing result obtaining device applied to a transmitter of a sensing signal, includes:
a first transmission unit used to transmit information of a transmitter to a first object, wherein the first object is a first network function or a receiver of a sensing signal.

In a twenty-third aspect, one embodiment of the present disclosure provides a sensing result obtaining method applied to a transmitter of a sensing signal, including: a memory, a transceiver, and a processor;
wherein the memory is used to store a computer program; the transceiver is used to transmit and receive data under the control of the processor; and the processor is used to read the computer program in the memory and perform the following operations:
receiving first sensing data transmitted by a receiver of a sensing signal;
determining second sensing data based on the first sensing data and information of the transmitter;
transmitting the second sensing data to a first network function.

In a twenty-fourth aspect, one embodiment of the present disclosure provides a sensing result obtaining device applied to a transmitter of a sensing signal, including:
a first receiving unit used to receive first sensing data transmitted by a receiver of a sensing signal;
a first determining unit used to determine second sensing data based on the first sensing data and information of the transmitter;
a first transmission unit used to transmit the second sensing data to a first network function.

In a twenty-fifth aspect, one embodiment of the present disclosure provides a sensing result obtaining method applied to a receiver of a sensing signal, including: a memory, a transceiver, and a processor;
wherein the memory is used to store a computer program; the transceiver is used to transmit and receive data under the control of the processor; and the processor is used to read the computer program in the memory and perform the following operations:
receiving information of a transmitter of a sensing signal transmitted by the transmitter;
determining second sensing data based on the first sensing data obtained by the receiver and the information of the transmitter;
transmitting the second sensing data to the first network function.

In a twenty-sixth aspect, one embodiment of the present disclosure provides a sensing result obtaining method applied to a receiver of a sensing signal, including:
a first receiving unit used to receive information of a transmitter of a sensing signal transmitted by the transmitter;
a first determining unit used to determine second sensing data based on the first sensing data obtained by the receiver and the information of the transmitter;
a first transmission unit used to transmit the second sensing data to the first network function.

In a twenty-seventh aspect, one embodiment of the present disclosure provides a sensing result obtaining device applied to a receiver of a sensing signal, including: a memory, a transceiver, and a processor;
wherein the memory is used to store a computer program; the transceiver is used to transmit and receive data under the control of the processor; and the processor is used to read the computer program in the memory and perform the following operations:
transmitting first sensing data obtained by the receiver to a transmitter of the sensing signal.

In a twenty-eighth aspect, one embodiment of the present disclosure provides a sensing result obtaining device, applied to a receiver of a sensing signal, including:
a first transmission unit used to transmit first sensing data obtained by the receiver to a transmitter of the sensing signal.

In a twenty-ninth aspect, one embodiment of the present disclosure provides a processor-readable storage medium, including a computer program stored thereon; wherein the computer program is used to cause a processor to execute the method according to the eleventh aspect to the sixth aspect.

In the sensing configuration method of the embodiments of the present disclosure, the first network device directly transmits the sensing signal configuration information to the first device (transmitter and/or receiver of the sensing signal), which can reduce signaling overhead and simplify the sensing signal configuration process. In the sensing result obtaining method of the embodiments of the present disclosure, the transmitter or receiver of the sensing signal directly obtains sensing measurement data or auxiliary information from its counterpart, thereby determining the sensing result. This can reduce the transmission overhead of control signaling or sensing data, and reduce the computational overhead of the sensing function.

### BRIEF DESCRIPTION OF THE DRAWINGS

FIG. 1 to FIG. 5 are schematic diagrams showing interaction process of a sensing signal configuration in the related art;
FIG. 6 is an interactive flow chart of a sensing configuration method according to an embodiment of the present disclosure;
FIG. 7 is a flow chart of a sensing configuration method applied to a first network function according to an embodiment of the present disclosure;
FIG. 8 is a flow chart of a sensing configuration method applied to a first network function according to an embodiment of the present disclosure;
FIG. 9 is a flow chart of a sensing configuration method applied to a first device according to an embodiment of the present disclosure;
FIG. 10 is an interactive flow chart of a sensing configuration method of a first example according to an embodiment of the present disclosure;
FIG. 11 is an interactive flow chart of a sensing configuration method of a second example according to an embodiment of the present disclosure;
FIG. 12 is a first schematic diagram of a sensing configuration device according to an embodiment of the present disclosure;
FIG. 13 is a second schematic diagram of a sensing configuration device according to an embodiment of the present disclosure;
FIG. 14 is a third schematic diagram of a sensing configuration device according to an embodiment of the present disclosure;
FIG. 15 is a fourth schematic diagram of a sensing configuration device according to an embodiment of the present disclosure;
FIG. 16 is a fifth schematic diagram of a sensing configuration device according to an embodiment of the present disclosure;
FIG. 17 is a sixth schematic diagram of a sensing configuration device according to an embodiment of the present disclosure;
FIG. 18 is a flow chart of a sensing result obtaining method applied to a first network function according to an embodiment of the present disclosure;
FIG. 19 is another flow chart of a sensing result obtaining method applied to a first network function according to an embodiment of the present disclosure;
FIG. 20 is a flow chart of a sensing result obtaining method applied to a transmitter of a sensing signal according to an embodiment of the present disclosure;
FIG. 21 is another flow chart of a sensing result obtaining method applied to a transmitter of a sensing signal according to an embodiment of the present disclosure;
FIG. 22 is a flow chart of a sensing result obtaining method applied to a receiver of a sensing signal according to an embodiment of the present disclosure;
FIG. 23 is another flow chart of a sensing result obtaining method applied to a receiver of a sensing signal according to an embodiment of the present disclosure;
FIG. 24 is an interactive flow chart of a sensing result obtaining method of a third example according to an embodiment of the present disclosure;
FIG. 25 is an interactive flow chart of a sensing result obtaining method of a fourth example according to an embodiment of the present disclosure;
FIG. 26 is an interactive flow chart of a sensing result obtaining method of a fifth example according to an embodiment of the present disclosure;
FIG. 27 is a first schematic diagram of a sensing result obtaining device according to an embodiment of the present disclosure;
FIG. 28 is a second schematic diagram of a sensing result obtaining device according to an embodiment of the present disclosure;
FIG. 29 is a third schematic diagram of a sensing result obtaining device according to an embodiment of the present disclosure;
FIG. 30 is a fourth schematic diagram of a sensing result obtaining device according to an embodiment of the present disclosure;
FIG. 31 is a fifth schematic diagram of a sensing result obtaining device according to an embodiment of the present disclosure;
FIG. 32 is a sixth schematic diagram of a sensing result obtaining device according to an embodiment of the present disclosure;
FIG. 33 is a seventh schematic diagram of a sensing result obtaining device according to an embodiment of the present disclosure;
FIG. 34 is an eighth schematic diagram of a sensing result obtaining device according to an embodiment of the present disclosure;
FIG. 35 is a ninth schematic diagram of a sensing result obtaining device according to an embodiment of the present disclosure;
FIG. 36 is a tenth schematic diagram of a sensing result obtaining device according to an embodiment of the present disclosure;
FIG. 37 is an eleventh schematic diagram of a sensing result obtaining device according to an embodiment of the present disclosure; and
FIG. 38 is a twelfth schematic diagram of a sensing result obtaining device according to an embodiment of the present disclosure.

### DETAILED DESCRIPTION

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present application, the term "plurality" refers to two or more than two, and other quantifiers are similar.

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

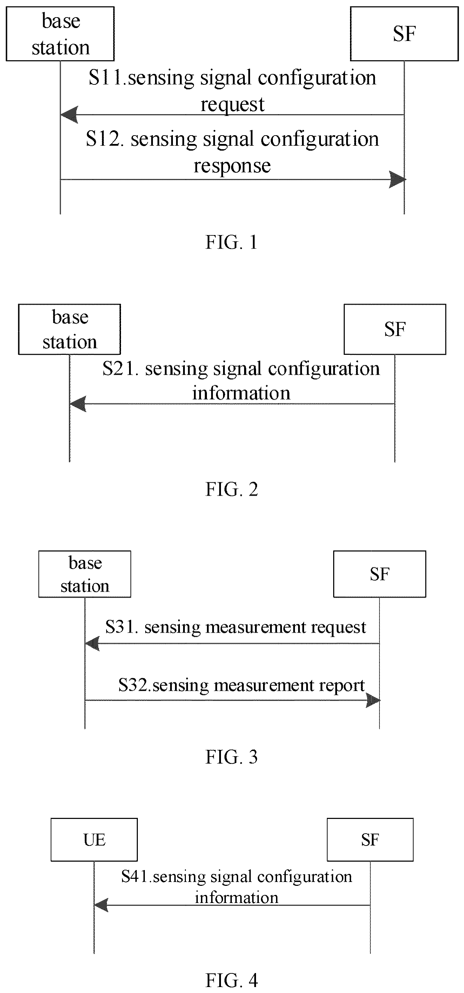

A process of sensing configuration between SF, base station and UE is shown in FIG. 1 to FIG. 5. Specifically, SF requests the base station for configuration of a sensing signal, and the base station returns sensing signal configuration information to SF, as shown in S11-S12 in FIG. 1. The sensing signal configuration information includes configuration of a sensing measurement signal.

In FIG. 2, the SF transmits the sensing signal configuration information to the base station (S21), and the sensing signal configuration information may specifically include: sensing roles (receiver, transmitter, receiver and transmitter of the sensing signal) in the sensing mode, sensing result reporting mode, information assisting transmission of the sensing signal (for example, direction information, which can facilitate the base station to determine a transmission beam of the sensing signal), and information assisting reception of the sensing signal (for example, configuration of time domain, frequency domain, code domain and spatial domain of a to-be-received sensing signal).

The SF transmits a sensing measurement request to the base station, and the base station reports a sensing measurement result to the SF, as shown in S31-S32 of FIG. 3. The sensing measurement request message may carry a list of measurement characteristics (e.g., sensing distance, angle, Doppler shift, etc.). The sensing measurement result may be one or more of a distance of a sensing target, a speed/velocity of the sensing target, delay spread spectrum, the Doppler spectrum, etc.

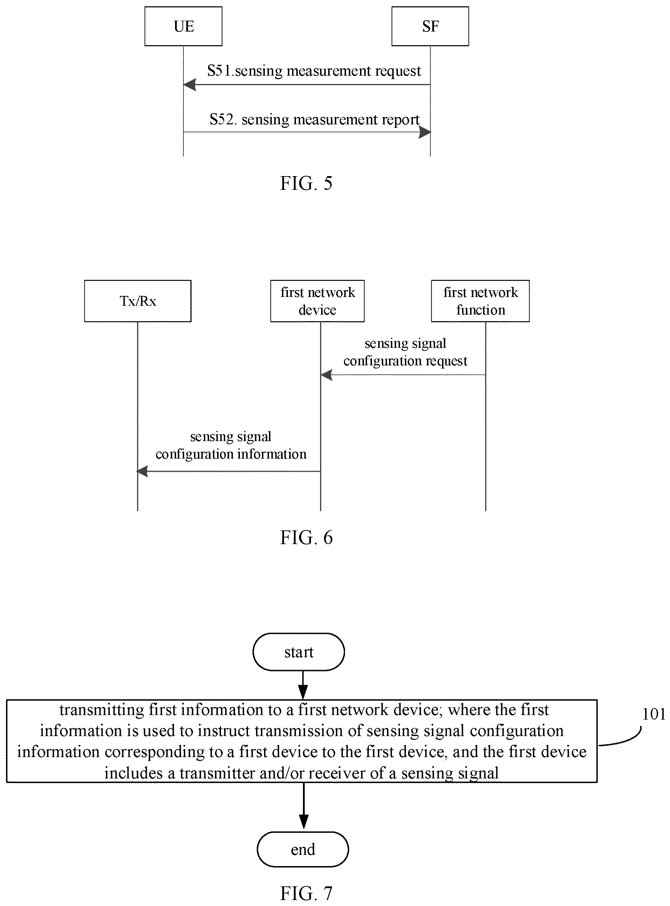

In FIG. 4, SF transmits the sensing signal configuration information to UE (S41), and FIG. 5 includes a process of UE receiving the sensing measurement request transmitted by SF and UE reporting a sensing measurement result to SF (S51-S52). The sensing measurement request message may carry a list of measurement characteristics (e.g., sensing distance, angle, Doppler shift, etc.). The sensing measurement result may be one or more of a distance of a sensing target, a speed/velocity of the sensing target, delay spread spectrum, Doppler spectrum, etc.

As can be seen from FIG. 1 to FIG. 5, in the above process, SF first needs to request and obtain the sensing signal configuration information from the base station (such as S11-S12 in FIG. 1), then transmit the sensing signal configuration information to the base station (such as S21 in FIG. 2), and transmit the sensing signal configuration information to the UE (such as S41 in FIG. 4). In addition, if a base station that configures the measurement signal is a first base station, and a base station that receives the sensing signal configuration information is a second base station (that is, the base stations in FIG. 1 and FIG. 2 are two different base stations), then SF needs to obtain the sensing signal configuration information from the first base station first, and then transmit it to the second base station. It can be seen that the above transmission process of the sensing signal configuration information is relatively complex, resulting in significant overhead of signaling transmission.

In order to solve at least one of the above problems, one embodiment of the present disclosure proposes a sensing configuration method, which can reduce the signaling overhead when configuring a sensing signal for a UE/network device (base station).

The method and the device are based on the same application concept. Since the method and the device solve the problem in a similar principle, the implementation of the device and the method can refer to each other, and the repeated parts will not be repeated.

As shown in FIG. 6, in the sensing configuration method of the embodiment of the present disclosure, when a first network function requests a first network device (e.g., base station A) for configuration of a sensing signal, first network function instructs the first network device to transmit sensing signal configuration information to a transmitter (Tx) and/or receiver (Rx) of the sensing signal (e.g., UE, base station B). The first network device determines the sensing signal configuration information, and then directly transmits the sensing signal configuration information to the transmitter and/or receiver of the sensing signal.

It should also be noted that the sensing signal in each embodiment of the present disclosure may refer to a radio signal used for sensing, the sensing signal may be a radio signal dedicated to sensing, or the sensing signal may be a radio signal used for both sensing and communication.

The following describes the sensing configuration method of the embodiment of the present disclosure from the perspective of each network element.

Referring to FIG. 7, FIG. 7 is a flow chart of a sensing configuration method according to an embodiment of the present disclosure. When the method is applied to a first network function, the method includes the following steps.

Step 101: transmitting first information to a first network device; where the first information is used to instruct transmission of sensing signal configuration information corresponding to a first device to the first device, and the first device includes a transmitter and/or receiver of a sensing signal.

Here, a network function refers to a processing function in a network, which typically defines functional behavior and interfaces. The network function can be implemented as a network element on dedicated hardware, as a software instance running on the dedicated hardware, or as a virtualized function instantiated on an appropriate platform (e.g., cloud infrastructure). Specifically, a first network function may be a sensing function, which is a network function used for sensing. The sensing function can be a standalone network element or integrated with other network functions within the same network element. The first network device specifically may be a base station (e.g., a first base station). The transmitter and receiver of the sensing signal may be two different UEs, or a UE and a network device (including the first network device), or two different network devices (including the first network device). Of course, the transmitter and receiver may sometimes be the same device; in this case, the transmitter and receiver of the sensing signal may be the same UE or the same network device (including the first network device). The first device may be a UE or a network device, such as a second network device (e.g., the second base station).

In one embodiment of the present disclosure, the first information is used to instruct transmission of sensing signal configuration information corresponding to the first device to the first device, that is, the first information is used to instruct the first network device, in response to the first information, to transmit the sensing signal configuration information corresponding to the first device to the first device.

Here, the first information may be explicit indication information or implicit indication information, for example:
1) the first information is used to instruct the first network device to transmit the sensing signal configuration information corresponding to the first device to the first device, that is, to directly instruct the first network device to transmit the sensing signal configuration information in an explicit manner;
2) the first information is used to indicate an identifier of the first device, that is, to perform indication in an implicit manner. In this case, the first information may be identification information of the first device. Although the first information does not directly instruct the first network device to transmit the sensing signal configuration information, since the first information indicates the identifier of the first device, then, after receiving the first information, the first network function determines that the corresponding sensing signal configuration information needs to be transmitted to the first device.

Through the above steps, in the embodiment of the present disclosure, the first network function instructs the first network device to transmit the sensing signal configuration information to the first device, so that the first network device does not need to first transmit the sensing signal configuration information to the first network function, and then the first network function transmits it to the first device, thereby simplifying the transmission process of the sensing signal configuration information and reducing the signaling transmission overhead.

As an implementation, in one embodiment of the present disclosure, in the above step 101, the first network function may transmit a first message to the first network device; where the first message is used to instruct the first network device to determine the sensing signal configuration information or is used to indicate the sensing signal configuration information. The first message includes first information, and the first information is used to instruct transmission of the sensing signal configuration information corresponding to the first device to the first device. An indication manner of the first information may be the explicit manner or implicit manner described above. In this way, after receiving the first message, the first network device may determine the sensing signal configuration information, and then transmit the sensing signal configuration information corresponding to the first device to the first device. Through the above manner, in the embodiment of the present disclosure, one first message can simultaneously instruct the first network device to determine the sensing signal configuration information and transmit it to the relevant device, or simultaneously indicate the sensing signal configuration information to the first network device and transmit it to the relevant device, thereby simplifying the transmission process of the sensing signal configuration information and reducing the bit overhead of information transmission.

As another implementation, the first information is used to, in addition to instructing the first network device to determine the sensing signal configuration information, instruct transmitting the sensing signal configuration information corresponding to the first device to the first device. At this point, after receiving the first information, the first network device determines the sensing signal configuration information according to the first information, and then transmits the sensing signal configuration information corresponding to the first device to the first device.

As another implementation, the first information is used to, in addition to indicating the sensing signal configuration information, instruct transmitting the sensing signal configuration information corresponding to the first device to the first device. At this point, after receiving the first information, the first network device determines the sensing signal configuration information and then transmits the sensing signal configuration information corresponding to the first device to the first device.

In the embodiment of the present disclosure, after the first network device transmits the sensing signal configuration information corresponding to the first device to the first device, the first network device can feedback second information or third information to the first network function. At this point, the first network function receives the second information or the third information transmitted by the first network device. The second information is used to indicate that the first network device successfully configures the sensing signal for the first device. The third information is used to indicate that the first network device fails to configure the sensing signal for the first device. In the above manner, the first network function can be informed of a configuration result of the sensing signal on the first device side.

In some cases, after receiving the first message, the first network device may fail or succeed in determining the sensing signal configuration information based on the first message.

For example, the time-frequency domain resources of the first network device are insufficient to support the configuration of the sensing signal. At this point, the first network device may return fourth information to the first network function, and the first network function receives the fourth information transmitted by the first network device. The fourth information is used to indicate that the first network device fails to determine the sensing signal configuration information, thereby learning that the first network device fails to successfully determine the sensing signal configuration information.

For another example, if the first network device successfully determines the sensing signal configuration information, the sensing signal configuration information may also be transmitted to the first network function. At this point, the sensing signal configuration information may be transmitted together with the above second information or third information, or may be transmitted separately. That is to say, transmission mode and timing of the above sensing signal configuration information is not specifically limited in the embodiment of the present disclosure. The first network device may transmit the sensing signal configuration information to the first network function after successfully determining the sensing signal configuration information, or may transmit the sensing signal configuration information to the first network function after receiving information returned by the first device for indicating whether the sensing signal for the first device is successfully configured.

In addition, it is to be noted that for the receiver and transmitter of the sensing signal, the sensing signal configuration information required by each may be the same or different. For example, the sensing signal configuration information may include sensing signal common configuration information shared by both the receiver and the transmitter (such as time-frequency domain resource configuration of the sensing signal, etc.), and may also include the receiver's dedicated configuration information (such as reception configuration of the sensing signal, etc.) and the transmitter's dedicated configuration information (such as transmission configuration of the sensing signal, etc.). At this point, the sensing signal configuration information corresponding to the transmitter of the sensing signal includes the sensing signal common configuration information and the transmitter's dedicated configuration information, and the sensing signal configuration information corresponding to the receiver of the sensing signal includes the sensing signal common configuration information and the receiver's dedicated configuration information. The first network device may transmit all the sensing signal configuration information (including the sensing signal common configuration information, the receiver's dedicated configuration information, and the transmitter's dedicated configuration information) to the first network function, or may only transmit part of the sensing signal configuration information (such as the sensing signal common configuration information and the receiver's dedicated configuration information, or the sensing signal common configuration information and the transmitter's dedicated configuration information) to the first network function, thereby reducing the amount of transmitted data.

In the embodiment of the present disclosure, the first device may be one of the transmitter and the receiver. At this point, the first network function may also transmit sensing signal configuration information corresponding to a second device to the second device, and the second device is the other of the transmitter and the receiver. The second device may be a UE or a network device. That is, the first network device and the first network function transmit the sensing signal configuration information to the receiver and the transmitter of the sensing signal respectively. In addition, after receiving the sensing signal configuration information transmitted by the first network function, the second device may also feedback fifth information or sixth information. At this point, the first network function receives the fifth information or the sixth information transmitted by the second device, where the fifth information is used to indicate that sensing signal configuration for the second device is successful, and the sixth information is used to indicate that the sensing signal configuration for the second device is failed, so that a result of the sensing signal configuration for the second device can be known.

For example, in the case where the first device includes a transmitter of a sensing signal, at this point, the second device is a receiver of the sensing signal. In this case, the first network device transmits the sensing signal configuration information corresponding to the transmitter to the transmitter. In addition, the first network device can also transmit the sensing signal configuration information corresponding to the receiver to the first network function, that is, the sensing signal configuration information transmitted by the first network device and received by the first network function at this time is the sensing signal configuration information corresponding to the receiver. Further, the first network function can transmit the sensing signal configuration information corresponding to the receiver to the receiver, and receive the fifth information or the sixth information fed back by the receiver.

For another example, in the case where the first device includes a receiver of a sensing signal, at this point, the second device is a transmitter of the sensing signal. In this case, the first network device transmits the sensing signal configuration information corresponding to the receiver to the receiver. In addition, the first network device can also transmit the sensing signal configuration information corresponding to the transmitter to the first network function, that is, the sensing signal configuration information transmitted by the first network device and received by the first network function at this time is the sensing signal configuration information corresponding to the transmitter. Further, the first network function can transmit the sensing signal configuration information corresponding to the transmitter to the transmitter, and receive the fifth information or the sixth information fed back by the transmitter.

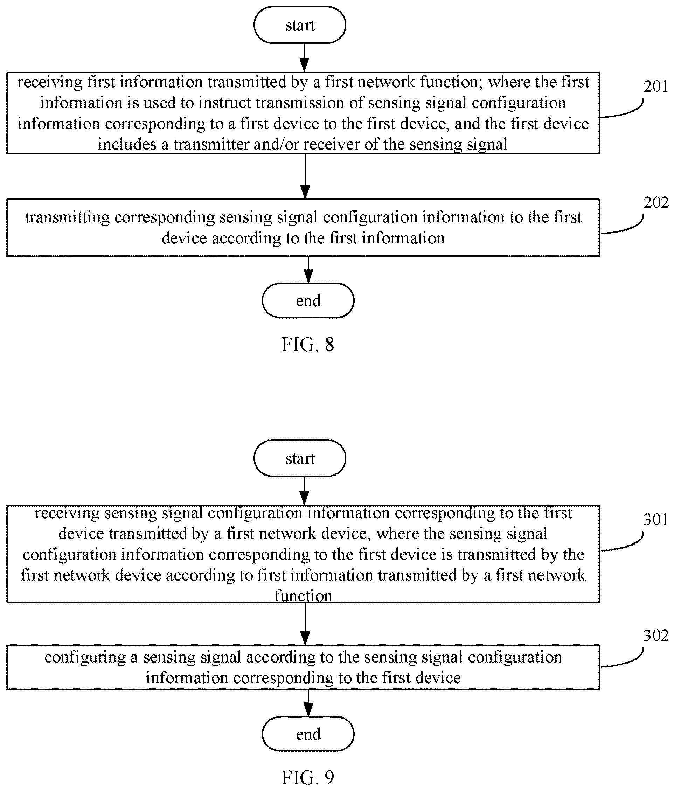

Referring to FIG. 8, FIG. 8 is another flow chart of the sensing configuration method provided in an embodiment of the present disclosure. When the method is applied to a first network device, the method includes the following steps.

Step 201: receiving first information transmitted by a first network function; where the first information is used to instruct transmission of sensing signal configuration information corresponding to a first device to the first device, and the first device includes a transmitter and/or receiver of the sensing signal.

Here, the first network device can specifically be a base station (such as a first base station). The transmitter and receiver of the sensing signal can be two different UEs, or a UE and a network device (including the first network device), or two different network devices (including the first network device). Of course, sometimes the transmitter and the receiver can be the same device. In this case, the transmitter and the receiver of the sensing signal can be the same UE, or the same network device (including the first network device). The first device can be a UE or a network device, such as a second network device (such as a second base station).

The first network function may be a sensing function, the first network device may be a base station (such as a first base station); the first device may be a UE, or a network device, such as a second network device (such as a second base station). The first information may be in an implicit indication manner, for example, the first information is identification information of the first device, and the first information may also be in an explicit indication manner. For the specific form of the first information, reference may be made to the foregoing description, which will not be repeated here.

Step 202: transmitting corresponding sensing signal configuration information to the first device according to the first information.

Through the above steps in the embodiment of the present disclosure, after receiving the first information transmitted by the first network function, the first network device directly transmits the sensing signal configuration information to the first device, thereby avoiding forwarding the sensing signal configuration information to the first device through the first network function, simplifying transmission process of configuration information and reducing information transmission overhead.

As an implementation, in the above step 201, the first network device may receive a first message transmitted by the first network function, where the first message is used to instruct the first network device to determine the sensing signal configuration information, or is used to indicate the sensing signal configuration information. The first message includes the first information. After receiving the first message, the first network device may determine the sensing signal configuration information.

As another implementation, the first information is used to, in addition to instructing the first network device to determine the sensing signal configuration information, instruct transmitting the sensing signal configuration information corresponding to the first device to the first device. After receiving the first information, the first network device determines the sensing signal configuration information according to the first information, and then transmits the sensing signal configuration information corresponding to the first device to the first device.

As another implementation, the first information is used to, in addition to indicating the sensing signal configuration information, instruct transmitting the sensing signal configuration information corresponding to the first device to the first device. At this point, after receiving the first information, the first network device determines the sensing signal configuration information and then transmits the sensing signal configuration information corresponding to the first device to the first device.

After the first network device transmits the corresponding sensing signal configuration information to the first device, the first device can perform sensing signal configuration according to the received sensing signal configuration information, and feedback a configuration result to the first network device. At this point, the first network device can also receive feedback information transmitted by the first device. For example, the first network device receives seventh information transmitted by the first device, and then transmits the second information to the first network function, where the seventh information is used to indicate that the sensing signal configuration for the first device is successful, and the second information is used to indicate that the first network device successfully configures the sensing signal for the first device. For another example, the first network device receives eighth information transmitted by the first device, and then transmits the third information to the first network function, where the eighth information is used to indicate that the sensing signal configuration for the first device is failed, and the third information is used to indicate that the first network device fails to configure the sensing signal for the first device. Through the above feedback mechanism, the first network function can be informed of the sensing signal configuration result for the first device.

In the embodiment of the present disclosure, the first network device may fail or succeed in sensing signal configuration information. Optionally, when the first network device determines that the sensing signal configuration information fails, the first network device transmits fourth information to the first network function, and the fourth information is used to indicate that the first network device fails to determine the sensing signal configuration information; and when the first network device successfully determines the sensing signal configuration information, the sensing signal configuration information is transmitted to the first network function. The sensing signal configuration information transmitted by the first network device to the first network function may be all the sensing signal configuration information (including the sensing signal common configuration information, the receiver's dedicated configuration information, and the transmitter's dedicated configuration information) transmitted to the first network function, or only part of the sensing signal configuration information (such as the sensing signal common configuration information and the receiver's dedicated configuration information, or the sensing signal common configuration information and the transmitter's dedicated configuration information) transmitted to the first network function, thereby reducing the amount of transmitted data.

As described above, when the first device is one of the transmitter and the receiver, and the second device is the other of the transmitter and the receiver, the first network device can transmit the sensing signal configuration information corresponding to the second device to the first device, so as to facilitate transmission of the sensing signal configuration information corresponding to the second device to the second device through the first network function.

As another implementation, the first network device may also transmit the sensing signal configuration information corresponding to the second device to the second device through the first device. At this point, the first network device transmits the sensing signal configuration information corresponding to the second device to the first device; the first device receives the sensing signal configuration information corresponding to the second device, and transmits the sensing signal configuration information corresponding to the second device to the second device, so that the second device can perform sensing signal configuration according to the received configuration information. Further, the second device may also feedback a configuration result of the sensing signal to the first device, and the first device further transmits ninth information or eleventh information to the first network device according to the configuration result of the sensing signal of the second device. At this point:

the first network device receives the ninth information transmitted by the first device, and transmits tenth information to the first network function, where the ninth information is used to indicate that the sensing signal configuration for the second device is successful, and the tenth information is used to indicate that the first network device successfully configures the sensing signal for the second device; or, the first network device receives the eleventh information transmitted by the first device, and transmits twelfth information to the first network function, where the eleventh information is used to indicate that the sensing signal configuration for the second device is failed, and the twelfth information is used to indicate that the first network device fails to configure the sensing signal for the second device.

It should also be noted that the tenth information or the twelfth information may be transmitted to the first network function together with the second information or the third information, or may be transmitted separately from the second information or the third information, which is not limited in this embodiment of the present disclosure.

Referring to FIG. 9, FIG. 9 is a flow chart of a sensing configuration method applied to a first device according to one embodiment of the present disclosure. The first device is one of a transmitter and a receiver of a sensing signal, and a second device is the other of the transmitter and the receiver of the sensing signal. The method includes:

Step 301: receiving sensing signal configuration information corresponding to the first device transmitted by a first network device, where the sensing signal configuration information corresponding to the first device is transmitted by the first network device according to first information transmitted by a first network function.

Here, the first network device can specifically be a base station (such as a first base station). The transmitter and receiver of the sensing signal can be two different UEs, or a UE and a network device (including the first network device), or two different network devices (including the first network device). Of course, sometimes the transmitter and the receiver can be the same device. In this case, the transmitter and the receiver of the sensing signal can be the same UE, or the same network device (including the first network device). The first device can be a UE or a network device, such as a second network device (such as a second base station).

The first information is used to instruct transmission of the sensing signal configuration information corresponding to the first device to the first device. A more specific description of the first information can refer to the above, which will not be repeated here. Here, the sensing signal configuration information corresponding to the first device can be the sensing signal common configuration information shared by the first device and the second device (such as the time-frequency domain resource configuration of the sensing signal, etc.) and the dedicated configuration information of the first device. For example, when the first device is a receiver of the sensing signal, the dedicated configuration information can be the dedicated configuration information of the receiver (such as the reception configuration of the sensing signal, etc.), and when the first device is a transmitter of the sensing signal, the dedicated configuration information can be the dedicated configuration information of the transmitter (such as the transmission configuration of the sensing signal, etc.).

Step 302: configuring a sensing signal according to the sensing signal configuration information corresponding to the first device.

Through the above steps, in the embodiment of the present disclosure, the first network function instructs the first network device to transmit corresponding sensing signal configuration information to the first device. There is no need to forward the corresponding sensing signal configuration information to the first device via the first network function, which can simplify the sensing signal configuration process and reduce information transmission overhead.

In step 302, the first device performs the sensing signal configuration, and the result may be that the configuration is successful or failed. Optionally, after the above step 302, the first device may also transmit seventh information or eighth information to the first network device, where the seventh information is used to indicate that the sensing signal configuration for the first device is successful, and the eighth information is used to indicate that the sensing signal configuration for the first device is failed.

In addition, in the embodiment of the present disclosure, a configuration sensing signal corresponding to the second device may also be transmitted to the second device through the first device, so that the second device can configure the sensing signal accordingly. At this point, in the above method of the embodiment of the present disclosure, the first device may also receive the sensing signal configuration information corresponding to the second device transmitted by the first network device, and then the first device transmits the sensing signal configuration information corresponding to the second device to the second device. Optionally, after the first device transmits the sensing signal configuration information corresponding to the second device to the second device, the first device may further receive the ninth information transmitted by the second device, and transmit the ninth information to the first network device, the ninth information is used to indicate that the sensing signal configuration for the second device is successful; or, receive the eleventh information transmitted by the second device, and forward the eleventh information to the first network device, the eleventh information is used to indicate that the sensing signal configuration for the second device is failed.

It can be seen from the above embodiments that in the embodiments of the present disclosure, the first network function instructs the first network device to directly transmit the sensing signal configuration information to the transmitter and/or receiver of the sensing signal (for example, UE, second network device), so that the sensing signal configuration path can be flexibly changed according to different situations.

The above describes the sensing signal configuration method of the embodiment of the present disclosure from the perspective of each network element. To help better understand the above embodiment, the above method of the embodiment of the present disclosure is further described hereinafter through examples of several specific scenarios.

In the following examples, the base station, as an entity for scheduling radio resources, can configure a sensing signal and then transmit the sensing signal configuration information to the transmitter and/or receiver of the sensing signal. In the scenario where sensing signals are transmitted and received between two base stations (base station A and base station B), the base station A or base station B configures the sensing signal. SF can determine whether to select the base station A or base station B for performing sensing signal configuration based on the sensing capabilities of the base station A and base station B. The sensing capability may include a sensing accuracy that the base station can provide. In the scenario where sensing signals are transmitted and received between a base station and a UE, the configuration of the sensing signal is usually performed by the base station. In the scenario where sensing signals are transmitted and received between two UEs, the configuration of the sensing signal is usually performed by the base station.

Determining the sensing signal configuration information includes determining a resource used to transmit the sensing signal. The resource used to transmit the sensing signal include one or more of the following: time domain resource, frequency domain resource, spatial domain resource, and code domain resource of the sensing signal. The time domain resource of the sensing signal is, for example, time unit such as frame, subframe, slot, symbol, and millisecond where the sensing signal is located. The frequency domain resource of the sensing signal is, for example, frequency unit such as resource block (RB) and subcarrier where the sensing signal is located. The spatial domain resource of the sensing signal is, for example, antenna port where the sensing signal is located. The code domain resource of the sensing signal is, for example, sequences used by the sensing signal.

### First example

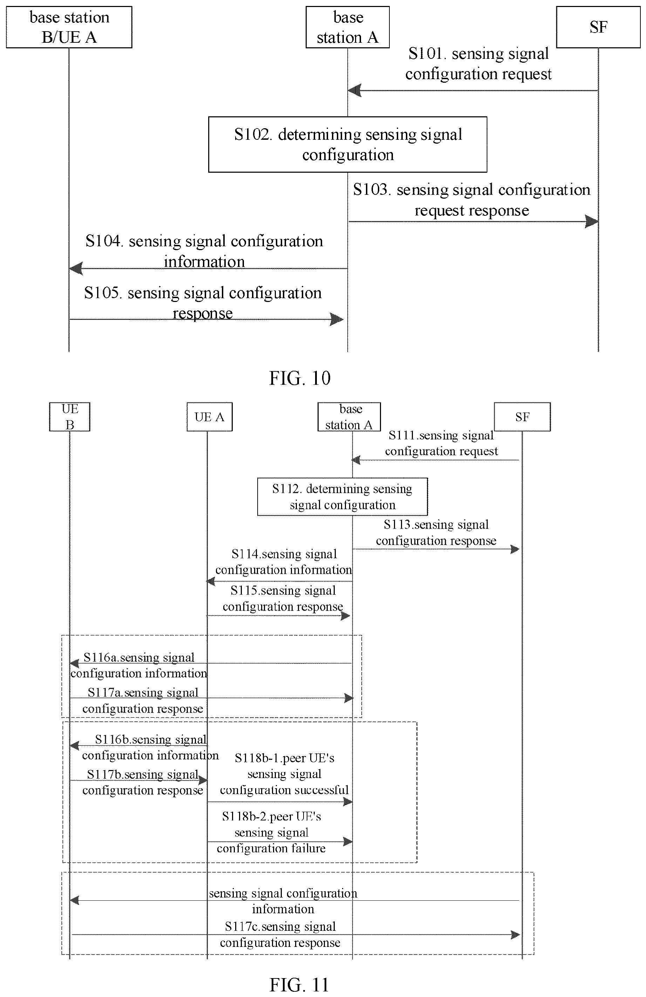

Taking configuring by a base station A, a sensing signal, as an example, the process of this example is shown in FIG. 10. This process is applicable to that the base station A transmits a sensing signal and the base station B receives the sensing signal (hereinafter referred to as base station A transmitting and base station B receiving), the base station A receives a sensing signal and the base station B transmits the sensing signal (hereinafter referred to as base station A receiving and base station B transmitting), the base station A transmits a sensing signal and UE receives the sensing signal (hereinafter referred to as base station A transmitting and UE receiving), the base station A receives a sensing signal and UE transmits the sensing signal (hereinafter referred to as base station A receiving and UE transmitting), UE receives a sensing signal transmitted by itself (hereinafter referred to as UE self-transmission and self-reception), UE A transmits a sensing signal and UE B receives the sensing signal (hereinafter referred to as UE A transmitting and UE B receiving), UE A receives a sensing signal and UE B transmits the sensing signal (hereinafter referred to as UE A receiving and UE B transmitting). As shown in FIG.10, the process includes:

S101: transmitting, by SF, a sensing signal configuration request message (such as a first message) to a base station A for instructing the base station to configure a sensing signal. SF may also indicate a parameter of the sensing signal to the base station A, and the parameter of the sensing signal is used by the base station to determine the sensing signal configuration information according to the parameter of the sensing signal. The parameter of the sensing signal may include one or more of the following: frequency domain width, carrier frequency, duration, subcarrier spacing, period, sensing accuracy, sensing range, etc. of the sensing signal. SF may also indicate, through explicit indication information or implicit indication information, to the base station A that the base station A needs to transmit the sensing signal configuration information to the base station B or UE. For the implicit indication information, for example, if SF indicates to base station A that a UE served by the base station participates in the transmission and reception of a to-be-configured sensing signal, it is considered that it implicitly indicates that the base station A needs to transmit the sensing signal configuration information to the UE. SF may also instruct the base station A to return the sensing signal configuration information, or not to return the sensing signal configuration information, and this indication may be explicit indication information or implicit indication information. For example, if SF indicates to the base station A that the sensing signal configuration needs to be transmitted to the UE, it implicitly indicates that the sensing signal configuration information does not need to be returned to SF.

S102: determining, by the base station A, the sensing signal configuration information. The sensing signal configuration information may include at least one of the following: time domain resource, frequency domain resource, spatial division resource, and code domain resource of the sensing signal. In the case where the SF indicates the sensing signal parameter to the base station in the S101, the base station needs to determine the sensing signal configuration that meets the parameters of the sensing signal according to the parameters of the sensing signal. The configuration of the sensing signal needs to meet the parameters of the sensing signal. For example, the frequency domain width of the resource block (RB) where the sensing signal is located needs to meet the frequency domain width indicated by the SF. In the case of failure to determine the sensing signal, the base station A may further indicate to the SF the reason for the failure to determine the sensing signal, for example, the frequency domain width cannot be met, the period cannot be met, the sensing accuracy cannot be met, etc.

S103: transmitting, by the base station A, a sensing signal configuration request response message to SF, where the response message may indicate at least one of the following messages: base station B or UE sensing signal configuration success, base station B or UE sensing signal configuration failure, and sensing signal configuration information. The sensing signal configuration information may generally be used to indicate resources for transmitting sensing signals. The base station A may determine whether the response message includes sensing signal configuration information according to the indication in S101.

S104: indicating, by the base station A, the sensing signal configuration to the base station B or UE. S104 may be performed by the base station A according to the SF indicating to the base station A that the base station A needs to transmit the sensing signal configuration to the base station B or UE in S101. If in S101, the SF does not indicate to the base station A that the sensing signal configuration needs to be transmitted to the base station B or UE, the base station A may not perform this step.

S105: transmitting, by the base station B or UE, a sensing signal configuration response message to the base station A, which may indicate at least one of the following: sensing signal configuration completed, sensing signal configuration successful/accepted configuration, sensing signal configuration failed/rejected configuration.

The order of S102 and S103 is not limited. Usually, S103 is optional.

The order of S103 and S104-S105 is not limited. In one implementation, S103 may be executed before S105. For example, at this time, the base station A may assume that the sensing signal configuration for the base station B or UE is successful. In another implementation, S103 may be executed after S105, and the base station A executes S103 after receiving a sensing signal configuration response from the base station B or UE. Specifically, the response received by the base station A in S105 indicates that the configuration is completed, the configuration is successful/the configuration is accepted, and the base station A indicates to SF that the sensing signal configuration is successful in S103. The response received by the base station A in S105 indicates that the configuration fails/the configuration is rejected, and the base station A indicates to SF that the sensing signal configuration fails in S103.

### Second example

The process of the second example shown in FIG. 11 corresponds to the scenario where UE A transmits and UE B receives, and UE A receives and UE B transmits. S111-S115 of the second example can refer to S101-S105 of the first example. In this example, the base station A can transmit sensing signal configuration information to UE A and UE B respectively, as shown in S116a and S117a of FIG. 11. The base station A can also transmit sensing signal configuration information of UE B to UE A, and UE A transmits the sensing signal configuration information of UE B to UE B, as shown in S116b and S117b of FIG. 11. The base station A can also transmit sensing signal configuration of UE A to UE A, and SF transmits sensing signal configuration of UE B to UE B, as shown in S116c and S117c of FIG. 11. Specifically, in this process:

In S111: indicating, by the SF, to the base station A that the base station A needs to transmit the sensing signal configuration information to the UE A, or that the base station A needs to transmit the sensing signal configuration information to the UE A and the UE B.

In S114: indicating, by the base station A, to UE A that UE A needs to transmit the sensing signal configuration of UE B to UE B.

The order of S112 and S113 is not limited. Usually, S113 is optional.

The order of S113 and S114-S115 is not limited. In one implementation, S113 may be executed after S115, i.e., S113 may be executed after the base station A receives a sensing signal configuration response from UE A and UE B. Specifically, the response received by the base station A in S115 indicates configuration completion, configuration success/acceptance of configuration, and the base station A indicates to SF that the sensing signal configuration is successful in S113. The response received by the base station A in S115 indicates configuration failure/rejection of configuration, and the base station A indicates to SF that the sensing signal configuration fails in S113.

The order of S113 and S116a-S117a is not limited. In one implementation, S113 can be executed after S117a, S113 can be executed after the base station A receives a sensing signal configuration response from UE A and UE B. Specifically, the responses received by the base station A in S115 and S117a both indicate that the sensing signal configuration is completed, the sensing signal configuration is successful/the configuration is accepted, and in S113, the base station A indicates to SF that the sensing signal configuration is successful. The responses received by the base station A in S115 and/or S117a indicate that the sensing signal configuration fails/the configuration is rejected, and in S113, the base station A indicates to SF that the sensing signal configuration fails.

The order of S115 and S116b-S117b is not limited. In one implementation, S115 may be executed after S117b, S115 may be executed after UE A receives a sensing signal configuration response from UE B. Specifically, the response received by UE A in S117b indicates configuration completion, configuration success/acceptance of configuration, and UE A indicates to the base station A that the sensing signal configuration is successful in S115. The response received by UE A in S117b indicates configuration failure/rejection of configuration, and UE A indicates to the base station A that the sensing signal configuration fails in S115.

In one implementation, after S117b, S118b-1 is executed: UE A indicates to the base station A that the sensing signal is successfully used to the peer UE. Specifically, the response received by UE A in S117b indicates configuration completion, configuration success/acceptance of configuration, and then S118b-1 is executed, and UE A indicates to the base station A that the sensing signal is successfully used to the peer UE. The order of S113 and S118b-1 is not limited. In one implementation, S113 can be executed after S118b-1, and S113 can be executed after the base station A receives an indication from UE A that the sensing signal is successfully used to the peer UE, and the base station A indicates to SF that the sensing signal configuration is successful.

In another embodiment, after S 117b, S118b-2 is executed: UE A indicates to the base station A that the configuration of the sensing signal for the peer UE has failed. Specifically, the response received by UE A in S117b indicates configuration failure/rejection of configuration, and then S118b-2 is executed, and UE A indicates to the base station A that the configuration of the sensing signal for the peer UE is failed. The order of S113 and S118b-2 is not limited. In one embodiment, S113 can be executed after S118b-2, and S113 can be executed after the base station A receives an indication of the failure to configure the sensing signal to the peer UE from UE A, and the base station A indicates to SF that the configuration of the sensing signal is failed. In one embodiment, after S118b-2, the base station A reconfigures the sensing signal, and executes S114-S115, S116b, and S117b again, where the sensing signal configuration is a new sensing signal configuration.

The sensing signal configuration information in S116 is determined according to the sensing signal configuration in S112 or S114. The three may be completely the same or partially the same. For example, the sensing signal configuration information in S114 includes the configuration information of the transmitter, the sensing signal configuration information in S116 includes the configuration information of the receiver, and the sensing signal configuration information of the transmitter and the receiver both include the time-frequency resource information of the sensing signal (common configuration information of the receiver and the transmitter).

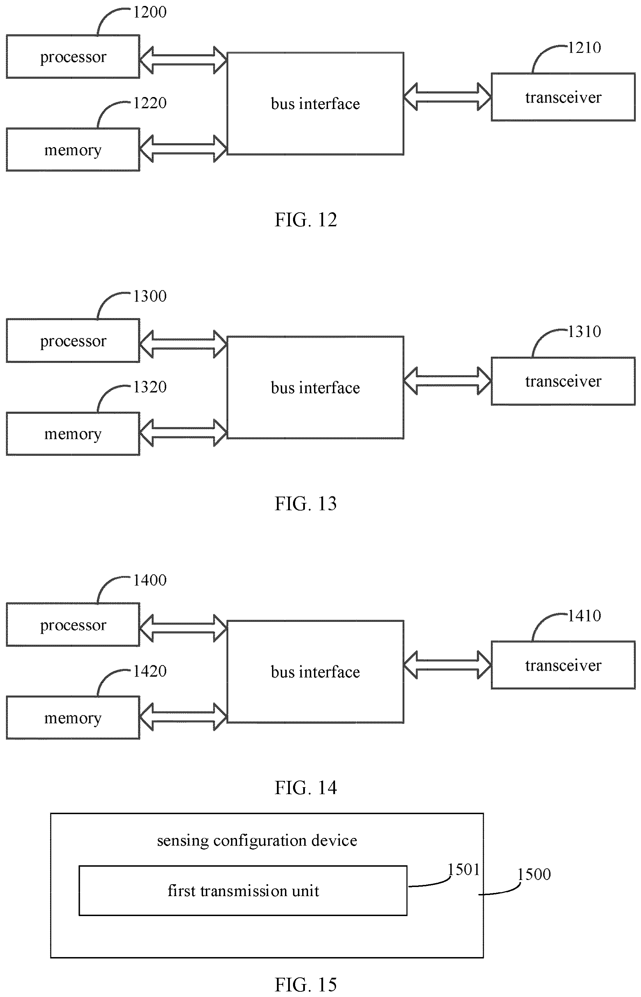

As shown in FIG. 12, one sensing configuration device according to one embodiment of the present disclosure, applied to a first network function, includes: a processor 1200 used to read a program in a memory 1220 and perform the following process:
transmitting first information to a first network device; where the first information is used to instruct transmission of sensing signal configuration information corresponding to a first device to the first device, and the first device includes a transmitter and/or receiver of a sensing signal;
a transceiver 1210 used to receive and transmit data under the control of the processor 120.

In FIG. 12, the processor 1200 is responsible for managing the bus architecture and normal processing; and the memory 1220 can store data used by the processor 1200 when performing operations.

Optionally, the first information is identification information of the first device.

Optionally, the processor 1200 further reads the program and performs the following steps:
receiving second information or third information transmitted by the first network device; where the second information is used to indicate that the first network device successfully configures the sensing signal for the first device, the third information is used to indicate that the first network device fails to configure the sensing signal for the first device.

Optionally, the processor 1200 further reads the program and performs the following steps:
receiving the sensing signal configuration information or fourth information transmitted by the first network device; where the fourth information is used to indicate that the first network device fails to determine the sensing signal configuration information.

Optionally, the first device is one of the transmitter and the receiver. Optionally, the processor 1200 further reads the program and performs the following steps:
transmitting sensing signal configuration information corresponding to a second device to the second device, where the second device is the other of the transmitter and the receiver.

Optionally, the processor 1200 further reads the program and performs the following steps:
receiving fifth information or sixth information transmitted by the second device; where the fifth information is used to indicate that the sensing signal configuration for the second device is successful, and the sixth information is used to indicate that the sensing signal configuration for the second device fails.

It is to be noted here that the above device provided in the embodiment of the present disclosure can implement all the method steps implemented by the method embodiment shown in FIG. 7, and can achieve the same technical effects. The parts and beneficial effects of this embodiment that are the same as the method embodiment will not be described in detail here.

As shown in FIG. 13, a sensing configuration device according to one embodiment of the present disclosure is applied to a first network device, and includes: a processor 1300 used to read a program in a memory 1320 and perform the following process:
receiving first information transmitted by a first network function; where the first information is used to instruct transmission of sensing signal configuration information corresponding to a first device to the first device, and the first device includes a transmitter and/or receiver of the sensing signal;
transmitting corresponding sensing signal configuration information to the first device according to the first information;
a transceiver 1310 used to receive and transmit data under the control of the processor 1300.

In FIG. 13, the processor 1300 is responsible for managing the bus architecture and general processing, and the memory 1320 can store data used by the processor 1300 when performing operations.

Optionally, the first information is identification information of the first device.

Optionally, the processor 1300 further reads the program and performs the following steps:
receiving a first message transmitted by the first network function, where the first message is used to instruct the first network device to determine sensing signal configuration information, and the first message includes the first information.

The method further includes: determining sensing signal configuration information according to the first message.

Optionally, the processor 1300 further reads the program and performs the following steps:
determining the sensing signal configuration information according to the first information.

Optionally, the processor 1300 further reads the program and performs the following steps:
receiving seventh information transmitted by the first device, and transmitting second information to the first network function; where the seventh information is used to indicate that the sensing signal configuration for the first device is successful, and the second information is used to indicate that the first network device successfully configures the sensing signal for the first device;
   or,
receiving eighth information transmitted by the first device, and transmitting third information to the first network function; where the eighth information is used to indicate that the sensing signal configuration for the first device is failed, and the third information is used to indicate that the first network device fails to configure the sensing signal for the first device.

Optionally, the processor 1300 further reads the program and performs the following steps:
when failing to determining the sensing signal configuration information, transmitting fourth information to the first network function, where the fourth information is used to indicate that the first network device fails to determine the sensing signal configuration information;
when the sensing signal configuration information is successfully determined, transmitting the sensing signal configuration information to the first network function.

Optionally, the first device is one of the transmitter and the receiver, and the processor 1300 further reads the program and performs the following steps:
transmitting sensing signal configuration information corresponding to a second device to the first device, where the second device is the other of the transmitter and the receiver;
receiving ninth information transmitted by the first device, and transmitting tenth information to the first network function; where the ninth information is used to indicate that the sensing signal configuration for the second device is successful, and the tenth information is used to indicate that the first network device successfully configures the sensing signal to the second device; or, receiving eleventh information transmitted by the first device, and transmitting twelfth information to the first network function, where the eleventh information is used to indicate that the sensing signal configuration for the second device is failed, and the twelfth information is used to indicate that the first network device fails to configure the sensing signal for the second device.

It is to be noted here that the above device provided in the embodiment of the present disclosure can implement all the method steps implemented by the method embodiment shown in FIG. 8 and can achieve the same technical effects. The parts and beneficial effects of this embodiment that are the same as the method embodiment will not be described in detail here.

As shown in FIG. 14, a sensing configuration device according to an embodiment of the present disclosure is applied to a first device. The first device is one of a transmitter and a receiver of a sensing signal. The device includes: a processor 1400 used to read a program in a memory 1420 and perform the following process:
receiving sensing signal configuration information corresponding to the first device transmitted by a first network device, where the sensing signal configuration information corresponding to the first device is transmitted by the first network device according to first information transmitted by a first network function;
configuring a sensing signal according to the sensing signal configuration information corresponding to the first device;
a transceiver 1410 used to receive and transmit data under the control of the processor 1400.

In FIG. 14, the processor 1400 is responsible for managing the bus architecture and general processing, and the memory 1420 can store data used by the processor 1400 when performing operations.

Optionally, the processor 1400 further reads the program and performs the following steps:
transmitting seventh information or eighth information to the first network device, where the seventh information is used to indicate that the sensing signal configuration for the first device is successful, and the eighth information is used to indicate that the sensing signal configuration for the first device is failed.

Optionally, the processor 1400 further reads the program and performs the following steps:
receiving sensing signal configuration information corresponding to a second device transmitted by the first network device, where the second device is the other of the transmitter and the receiver;
transmitting the sensing signal configuration information corresponding to the second device to the second device;
receiving ninth information transmitted by the second device, and transmitting the ninth information to the first network device; where the ninth information is used to indicate that the sensing signal configuration for the second device is successful; or, receiving the eleventh information transmitted by the second device, and forwarding the eleventh information to the first network device, where the eleventh information is used to indicate that the sensing signal configuration for the second device is failed.

It is to be noted here that the above device provided in the embodiment of the present disclosure can implement all the method steps implemented by the method embodiment shown in FIG. 9, and can achieve the same technical effects. The parts and beneficial effects of this embodiment that are the same as the method embodiment will not be described in detail here.

As shown in FIG. 15, a sensing configuration device 1500 according to an embodiment of the present disclosure is applied to a first network function, including:
a first transmission unit 1501 used to transmit first information to a first network device; where the first information is used to instruct transmission of sensing signal configuration information corresponding to a first device to the first device, and the first device includes a transmitter and/or receiver of a sensing signal.

Through the above units, the sensing signal configuration process can be simplified and the information transmission overhead can be reduced.

Optionally, the first information is identification information of the first device.

Optionally, the first transmission unit 1501 is further used to:
transmit a first message to the first network device, where the first message is used to instruct the first network device to determine the sensing signal configuration information, and the first message includes the first information.

Optionally, the above device further includes:
a first receiving unit is used to receive second information or third information transmitted by the first network device; where the second information is used to indicate that the first network device successfully configures the sensing signal for the first device, the third information is used to indicate that the first network device fails to configure the sensing signal for the first device.

Optionally, the above device further includes:
a second receiving unit used to receive the sensing signal configuration information or fourth information transmitted by the first network device; where the fourth information is used to indicate that the first network device fails to determine the sensing signal configuration information.

Optionally, the first device is one of the transmitter and the receiver; and the device further includes:
a second transmission unit used to transmit sensing signal configuration information corresponding to a second device to the second device, where the second device is the other of the transmitter and the receiver.

Optionally, the above device further includes:
a third receiving unit used to receive fifth information or sixth information transmitted by the second device; where the fifth information is used to indicate that the sensing signal configuration for the second device is successful, and the sixth information is used to indicate that the sensing signal configuration for the second device fails.

It is to be noted here that the above device provided in the embodiment of the present disclosure can implement all the method steps implemented by the method embodiment shown in FIG. 7, and can achieve the same technical effects. The parts and beneficial effects of this embodiment that are the same as the method embodiment will not be described in detail here.

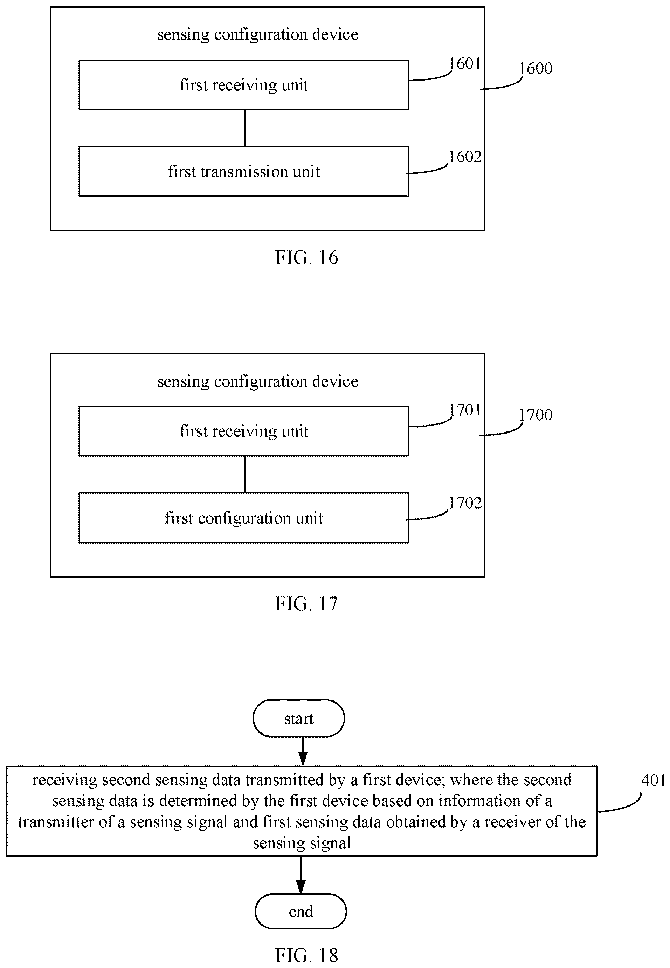

As shown in FIG. 16, a sensing configuration device 1600 according to an embodiment of the present disclosure is applied to a first network device and includes:
a first receiving unit 1601 used to receive first information transmitted by a first network function; where the first information is used to instruct transmission of sensing signal configuration information corresponding to a first device to the first device, and the first device includes a transmitter and/or receiver of the sensing signal;
a first transmission unit 1602 used to transmit corresponding sensing signal configuration information to the first device according to the first information.

Through the above units, the sensing signal configuration process can be simplified and the information transmission overhead can be reduced.

Optionally, the first information is identification information of the first device.

Optionally, the first receiving unit 1601 is further used to receive a first message transmitted by the first network function, where the first message is used to instruct the first network device to determine sensing signal configuration information, and the first message includes the first information.

The device further includes: a first determining unit sued to determine sensing signal configuration information according to the first message.

Optionally, the device further includes: a second determining unit used to determine sensing signal configuration information according to the first information.

Optionally, the device further includes:
a second receiving unit used to receive seventh information transmitted by the first device, and transmit second information to the first network function; where the seventh information is used to indicate that the sensing signal configuration for the first device is successful, and the second information is used to indicate that the first network device successfully configures the sensing signal for the first device;
   or,
a third receiving unit used to receive eighth information transmitted by the first device, and transmit third information to the first network function; where the eighth information is used to indicate that the sensing signal configuration for the first device is failed, and the third information is used to indicate that the first network device fails to configure the sensing signal for the first device.

Optionally, the device further includes:
a second transmission unit used to:
when failing to determining the sensing signal configuration information, transmit fourth information to the first network function, where the fourth information is used to indicate that the first network device fails to determine the sensing signal configuration information;
when the sensing signal configuration information is successfully determined, transmit the sensing signal configuration information to the first network function.

Optionally, the first device is one of the transmitter and the receiver, and the device further includes:
a third transmission unit used to transmit sensing signal configuration information corresponding to a second device to the first device, where the second device is the other of the transmitter and the receiver;
a transceiver processing unit used to receive ninth information transmitted by the first device, and transmit tenth information to the first network function; where the ninth information is used to indicate that the sensing signal configuration for the second device is successful, and the tenth information is used to indicate that the first network device successfully configures the sensing signal to the second device; or, receiving eleventh information transmitted by the first device, and transmitting twelfth information to the first network function, where the eleventh information is used to indicate that the sensing signal configuration for the second device is failed, and the twelfth information is used to indicate that the first network device fails to configure the sensing signal for the second device.

It is to be noted here that the above device provided in the embodiment of the present disclosure can implement all the method steps implemented by the method embodiment shown in FIG. 8, and can achieve the same technical effects. The parts and beneficial effects of this embodiment that are the same as the method embodiment will not be described in detail here.

As shown in FIG. 17, a sensing configuration apparatus 1700 according to an embodiment of the present disclosure is applied to a first device. The first device is one of a transmitter and a receiver of a sensing signal. The device includes:
a first receiving unit 1701 used to receive sensing signal configuration information corresponding to the first device transmitted by a first network device, where the sensing signal configuration information corresponding to the first device is transmitted by the first network device according to first information transmitted by a first network function;
a first configuration unit 1702 used to configure a sensing signal according to the sensing signal configuration information corresponding to the first device.

Through the above units, the sensing signal configuration process can be simplified and the information transmission overhead can be reduced.

Optionally, the above device further includes:
a first transmission unit used to transmit seventh information or eighth information to the first network device, where the seventh information is used to indicate that the sensing signal configuration for the first device is successful, and the eighth information is used to indicate that the sensing signal configuration for the first device is failed.

Optionally, the above device further includes:
a second receiving unit used to receive sensing signal configuration information corresponding to a second device transmitted by the first network device, where the second device is the other of the transmitter and the receiver;
a second transmission unit used to transmit the sensing signal configuration information corresponding to the second device to the second device;
a transceiver processing unit used to receive ninth information transmitted by the second device, and transmit the ninth information to the first network device; where the ninth information is used to indicate that the sensing signal configuration for the second device is successful; or, receiving the eleventh information transmitted by the second device, and forwarding the eleventh information to the first network device, where the eleventh information is used to indicate that the sensing signal configuration for the second device is failed.

It is to be noted here that the above device provided in the embodiment of the present disclosure can implement all the method steps implemented by the method embodiment shown in FIG. 9, and can achieve the same technical effects. The parts and beneficial effects of this embodiment that are the same as the method embodiment will not be described in detail here.

It is to be noted here that the above device provided in the embodiment of the present disclosure can implement all the method steps implemented in the above method embodiment, and can achieve the same technical effect. The parts and beneficial effects of this embodiment that are the same as those in the method embodiment will not be described in detail here.

In some sensing schemes, calculation of sensing-related information requires not only sensing measurement data, but also relevant information of the transmitter of the sensing signal. The relevant technology usually does not consider the signaling process in this case. On embodiment of the present disclosure provides a sensing result obtaining method, which designs a signaling process in which information of both the transmitter and the receiver needs to be considered when calculating the sensing-related information.

In various embodiments of the present disclosure, the first network function (such as SF) obtains the information of the transmitter (also referred to as auxiliary information) from the transmitter of the sensing signal, and obtains the first sensing data (also referred to as sensing measurement data) from the receiver of the sensing signal, thereby determining the second sensing data (also referred to as sensing result, such as localization data, ranging data, speed/velocity measurement data, imaging data, detection data, identification data, environmental reconstruction data, etc.). Alternatively, the transmitter of the sensing signal obtains the sensing measurement data from the receiver of the sensing signal, thereby determining the second sensing data, and sending it to the first network function. Alternatively, the receiver of the sensing signal obtains the auxiliary information from the transmitter of the sensing signal, thereby determining the second sensing data, and sending it to the first network function.

In various embodiments of the present disclosure, the information of the transmitter of the sensing signal includes at least one of the following information: the transmitter's location information, moving direction, moving speed/velocity, acceleration, direction angle of the transmitting antenna, transmission power of the sensing signal, etc. The first sensing data may include at least one of the following information: time delay of the sensing signal, received power of the sensing signal, and Doppler shift of the sensing signal. The second sensing data may include at least one of the following information: a distance of a sensing target, a speed/velocity of the sensing target, an angle of the sensing target, position of the sensing target, etc.

In various embodiments of the present disclosure, the network function refers to a processing function in a network, which typically defines functional behavior and interfaces. The network function can be implemented as a network element on dedicated hardware, as a software instance running on the dedicated hardware, or as a virtualized function instantiated on an appropriate platform (e.g., cloud infrastructure). Specifically, a first network function may be a sensing function, which is a network function used for sensing. The sensing function can be a standalone network element or integrated with other network functions within the same network element. The transmitter and receiver of the sensing signal may be two different UEs, or a UE and a network device, or two different network devices. Of course, the transmitter and receiver may sometimes be the same device; in this case, the transmitter and receiver of the sensing signal may be the same UE or the same network device. The first device may be a UE or a network device (e.g., base station).

Referring to FIG. 18, a sensing result obtaining method according to an embodiment of the present disclosure is applied to a first network function and includes:
Step 401: receiving second sensing data transmitted by a first device; where the second sensing data is determined by the first device based on information of a transmitter of a sensing signal and first sensing data obtained by a receiver of the sensing signal, and the first device is one of the transmitter and the receiver of the sensing signal.

Here, the first device is one of the transmitter and the receiver of the sensing signal. The transmitter and the receiver of the sensing signal may be two different UEs, or a UE and a network device, or two different network devices. Of course, sometimes the transmitter and the receiver may be the same device, in which case the transmitter and the receiver of the sensing signal may be the same UE, or the same network device. The first device may be a UE or a network device (such as a base station).

Through the above steps, based on the information of the transmitter of the sensing signal and the first sensing data obtained by the receiver of the sensing signal, the first device can determine the second sensing data and transmit it to the first network function, which can eliminate the need to transmit the information of the transmitter and the first sensing data between the first network function and the first device, thereby reducing the transmission overhead of control signaling or the first sensing data. The first network function also does not need to perform calculation of the second sensing data, thereby reducing the calculation overhead of the first network function.

In addition, before the above step 401, the first network function may also transmit first information to the first device, where the first information is used to request the second sensing data. In this way, the first device transmits the second sensing data to the first network function in response to the first information transmitted by the first device.

In an embodiment of the present disclosure, when the first device is the receiver of the sensing signal and the second device is the transmitter of the sensing signal, the first network function may further transmit second information to the second device, where the second information is used to instruct the second device to transmit the information of the transmitter to the first device. In this way, the first device may determine the second sensing data based on the received information of the transmitter and the first sensing data measured by the first device.

When the first device is the transmitter of the sensing signal and the second device is the receiver of the sensing signal, the first network function may further transmit a third message to the second device, where the third message is used to instruct the second device to transmit the first sensing data to the first device. In this way, the first device may determine the second sensing data based on the received first sensing data and the information of the transmitter of the second device itself.

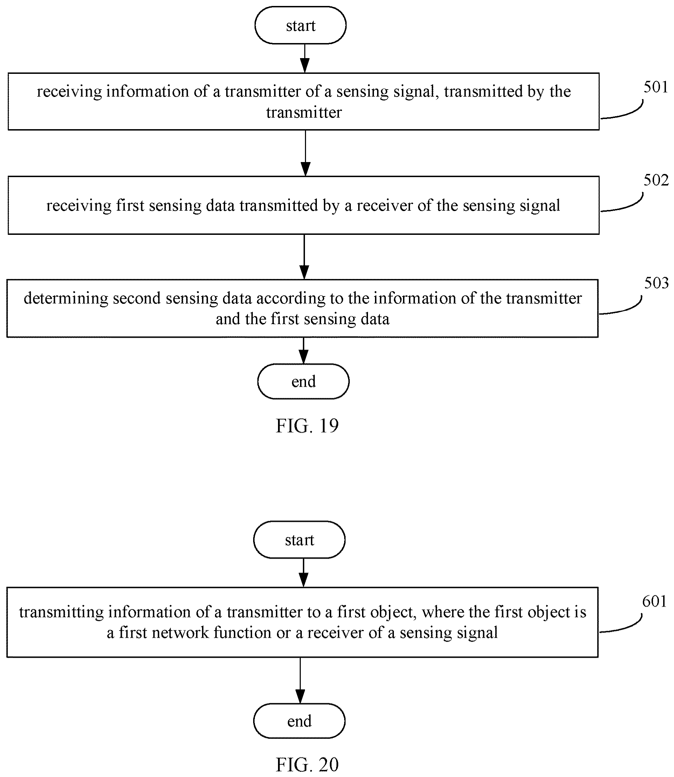

Referring to FIG. 19, a sensing result obtaining method provided in another embodiment of the present disclosure is applied to a first network function and includes:
Step 501: receiving information of a transmitter of a sensing signal, transmitted by the transmitter;
Step 502: receiving first sensing data transmitted by a receiver of the sensing signal;
Step 503: determining second sensing data according to the information of the transmitter and the first sensing data.

Through the above steps, the first network function receives the information of the transmitter transmitted by the transmitter of the sensing signal, and receives the first sensing data transmitted by the receiver of the sensing signal, so that the second sensing data can be determined according to the information of the transmitter and the first sensing data, thereby realizing the relevant sensing functionality.

Before the above step 501, the first network function may further transmit fourth information to the transmitter of the sensing signal, where the fourth information is used to request information of the transmitter. In response to the fourth information, the transmitter of the sensing signal transmits the information of the transmitter to the first network function.

Before the above step 502, the first network function may also transmit fifth information to the receiver of the sensing signal, where the fifth information is used to request the first sensing data. The receiver of the sensing signal transmits the first sensing data to the first network function in response to the fifth information.

Referring to FIG. 20, a sensing result obtaining method provided in one embodiment of the present disclosure is applied to a transmitter of a sensing signal and includes:
Step 601: transmitting information of a transmitter to a first object, where the first object is a first network function or a receiver of a sensing signal.

Through the above steps, the transmitter of the sensing signal transmits its own transmitter information to the first network function or the receiver of the sensing signal, so that the first network function or the receiver of the sensing signal can determine the second sensing data based on the information of the transmitter combined with the first sensing data of the receiver, thereby realizing the relevant sensing functionality.

Optionally, before the step 601, the transmitter of the sensing signal receives sixth information transmitted by the first object, where the sixth information is used to request information of the transmitter. In response to the sixth information, the transmitter of the sensing signal executes the step 601 to transmit the information of the transmitter to the first object.

Optionally, when the first object is the receiver, before the step 601, the transmitter of the sensing signal receives seventh information transmitted by the first network function, where the seventh information is used to instruct transmission of the information of the transmitter to the receiver. In response to the seventh information, the transmitter of the sensing signal executes the step 601 to transmit the information of the transmitter to the receiver.

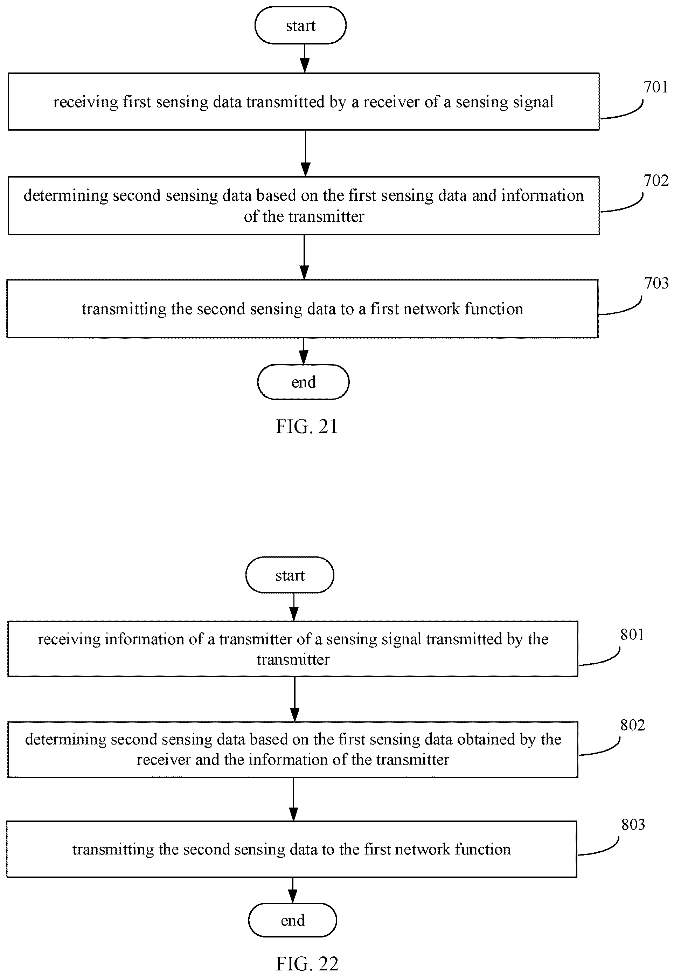

Referring to FIG. 21, a sensing result obtaining method provided in another embodiment of the present disclosure is applied to a transmitter of a sensing signal and includes:
Step 701: receiving first sensing data transmitted by a receiver of a sensing signal;
Step 702: determining second sensing data based on the first sensing data and information of the transmitter;
Step 703: transmitting the second sensing data to a first network function.

Through the above steps, the transmitter of the sensing signal determines the second sensing data and transmits it to the first network function based on the first sensing data obtained by its own measurement and the information of the transmitter transmitted by the transmitter of the sensing signal. Therefore, there is no need to transmit the first sensing data and information of the transmitter between the first network function and the sensing signal transceiver, and there is no need for the first network function to perform calculation of the second sensing data, thereby reducing the information transmission overhead of the first sensing data and also reducing the calculation overhead of the first network function.

Optionally, before the above step 703, the transmitter of the sensing signal also receives first information transmitted by the first network function, where the first information is used to request the second sensing data. Then, the transmitter of the sensing signal transmits the second sensing data to the first network function in response to the first information.

Optionally, before the above step 701, the transmitter of the sensing signal may further transmit seventh information to the receiver of the sensing signal, where the seventh information is used to request the first sensing data. In response to the seventh information, the receiver of the sensing signal transmits the first sensing data to the transmitter of the sensing signal.

Referring to FIG. 22, a sensing result obtaining method provided in one embodiment of the present disclosure is applied to a receiver of a sensing signal and includes:
Step 801: receiving information of a transmitter of a sensing signal transmitted by the transmitter;
Step 802: determining second sensing data based on the first sensing data obtained by the receiver and the information of the transmitter;
Step 803: transmitting the second sensing data to the first network function.

Through the above steps, the receiver of the sensing signal determines the second sensing data and transmits it to the first network function.

Optionally, before the step 803, the receiver of the sensing signal further receives first information transmitted by the first network function, where the first information is used to request the second sensing data. In response to the first information, the receiver of the sensing signal transmits the second sensing data to the first network function.

Optionally, before the step 801, the receiver of the sensing signal further transmits sixth information to the transmitter of the sensing signal, where the sixth information is used to request information of the transmitter of the sensing signal. The transmitter of the sensing signal transmits the information of the transmitter to the receiver of the sensing signal in response to the sixth information.

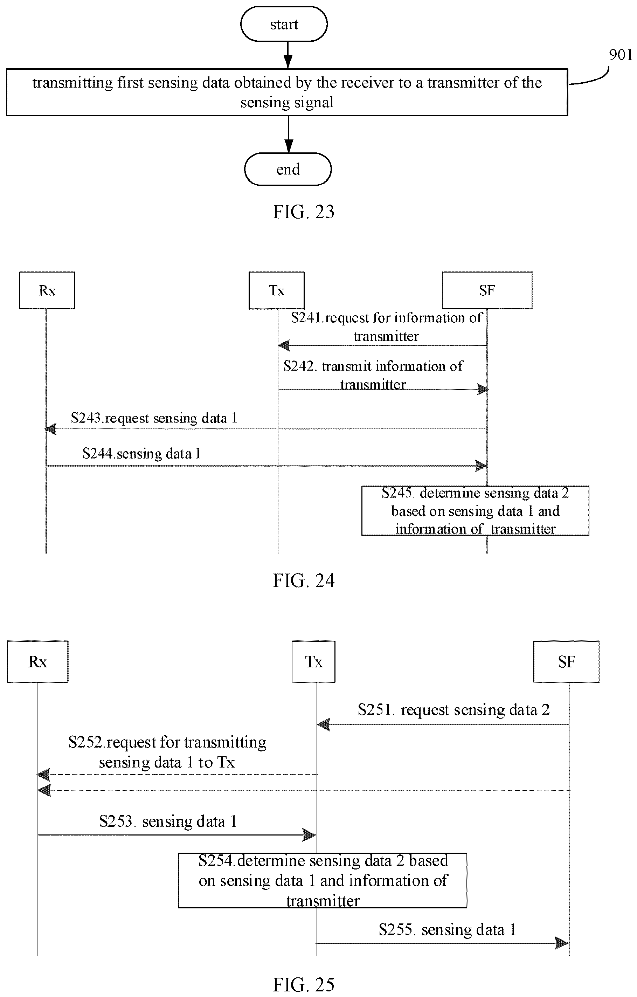

Referring to FIG. 23, a sensing result obtaining method provided in another embodiment of the present disclosure is applied to a receiver of a sensing signal and includes:
Step 901: transmitting first sensing data obtained by the receiver to a transmitter of the sensing signal.

Through the above steps, the transmitter of the sensing signal can obtain the first sensing data of the receiver, and then determine the second sensing data based on the first sensing data and the transmitter's own information, and can transmit the second sensing data to the first network function.

Optionally, before the step 901, the receiver of the sensing signal further receives seventh information transmitted by the transmitter, where the seventh information is used to request the first sensing data. In response to the seventh information, the receiver of the sensing signal transmits the first sensing data obtained by the receiver to the transmitter of the sensing signal.

Optionally, before the step 901, the receiver of the sensing signal further receives third information transmitted by the first network function, where the third information is used to instruct the receiver to transmit the first sensing data to the transmitter. In response to the third information, the receiver of the sensing signal transmits the first sensing data obtained by the receiver to the transmitter of the sensing signal.

The above describes the method of the embodiment of the present disclosure from the first network function, the receiver and the transmitter of the sensing signal. To help better understand the above embodiment, the above method of the embodiment of the present disclosure is further described below through examples of several specific scenarios.

The following provides three exemplary processes for determining the second sensing data in conjunction with FIG. 24 to FIG. 26. The following transmitter (Tx)of a sensing signal may be a base station or a UE, and a receiver (Rx) of the sensing signal may be a base station or a UE. In the following examples, the first network function is a SF.

### Third example

The process of this example is shown in FIG. 24 and includes:
S241-S242: SF requesting a transmitter (Tx) of a sensing signal for information of the transmitter (also referred to as auxiliary information). SF receives the information of the transmitter transmitted by Tx in response to the request.
S243-S244: SF requesting sensing data 1 (i.e., the first sensing data mentioned above) from a receiver of the sensing signal; and the receiver of the sensing signal obtaining the sensing data 1 and transmitting it to SF.
S245: SF determining sensing data 2 (i.e., the second sensing data mentioned above) based on the sensing data 1 and the auxiliary information. The sensing data 2 can be understood as a sensing result.

The sensing data 1 is, for example, time delay of the sensing signal, received power of the sensing signal, and Doppler shift of the sensing signal. The auxiliary information is, for example, a location of the network element and a transmission power of the sensing signal. The sensing data 2 is, for example, a distance of the sensing target, a speed/velocity of the sensing target, an angle of the sensing target, a location of the sensing target, etc. Information related to the transmitter is, for example, location information of the transmitter.

### Fourth example

The process of this example is shown in FIG. 25 and includes:
S251-S252: SF requesting a transmitter (Tx) of a sensing signal for sensing data 2, and SF or the transmitter (Tx) of the sensing signal requesting a receiver (Rx) of the sensing signal to transmit sensing data 1 to the transmitter (Tx) of the sensing signal.
S253: the receiver (Rx) of the sensing signal obtaining the sensing data 1 and transmitting it to the transmitter (Tx) of the sensing signal.
S254-S255: the transmitter (Tx) of the sensing signal determining the sensing data 2 according to its own transmitter information and the sensing data 1, and transmitting the sensing data 2 to the SF.

In S252: the SF instructing the receiver (Rx) of the sensing signal to report the sensing data 1 to the transmitter (Tx) of the sensing signal, or the transmitter (Tx) of the sensing signal instructing the receiver (Rx) of the sensing signal to request the sensing data 1. The transmitter (Tx) of the sensing signal may determine that it is necessary to instruct the receiver (Rx) of the sensing signal to request the sensing data 1 according to requesting for sensing data 2 in S251.

### Fifth example

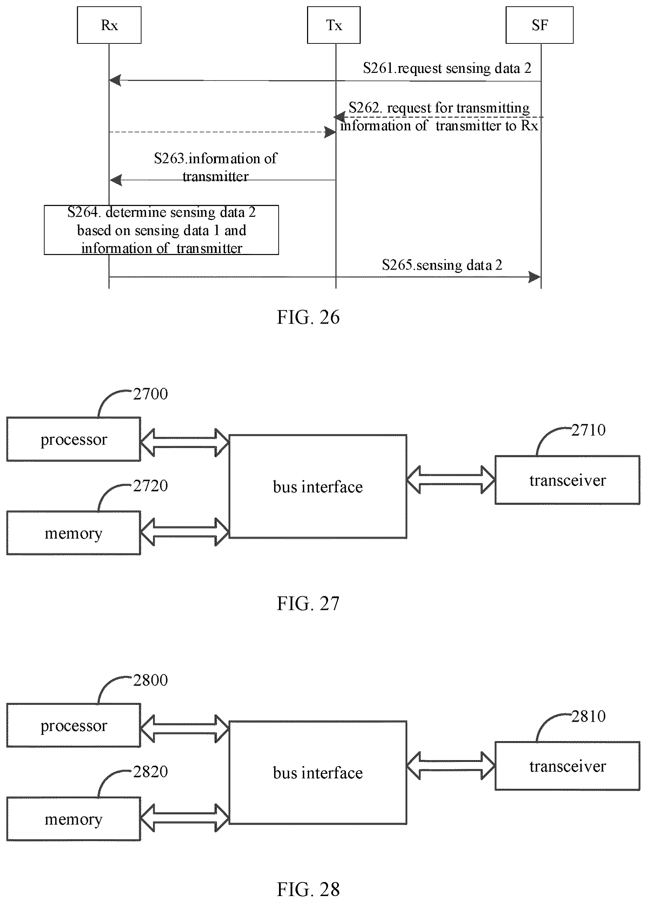

The process of this example is shown in FIG. 26 and includes:
S261: SF requesting the sensing data 2 from a receiver (Rx) of a sensing signal.
S262-S263: SF or the receiver (Rx) of the sensing signal requesting a transmitter (Tx) of the sensing signal to transmit the transmitter's information to the receiver (Rx) of the sensing signal. The transmitter (Tx) of the sensing signal transmits the transmitter's information to the receiver (Rx) of the sensing signal.
S264-S265: the receiver (Rx) of the sensing signal obtaining sensing data 1, determining sensing data 2 based on the sensing data 1 and information of the transmitter, and transmitting the sensing data 2 to SF.

In S262, the SF may instruct the transmitter (Tx) of the sensing signal to transmit the transmitter's information to the receiver (Rx) of the sensing signal, or the receiver (Rx) of the sensing signal may instruct the transmitter (Tx) of the sensing signal to request the transmitter's information. The receiver (Rx) of the sensing signal may request the sensing data 2 according to the instruction in S261, and determine that it is necessary to instruct the transmitter (Tx) of the sensing signal to request the transmitter's information.

As shown in FIG. 27, a sensing result obtaining device according to one embodiment of the present disclosure is applied to a first network function and includes: a processor 2700 used to read a program in a memory 2720 and perform the following process:
receiving second sensing data transmitted by a first device; where the second sensing data is determined by the first device based on information of a transmitter of a sensing signal and first sensing data obtained by a receiver of the sensing signal, and the first device is one of the transmitter and the receiver of the sensing signal;
a transceiver 2710 used t receives and transmit data under the control of the processor 2700.

In FIG. 27, the processor 2700 is responsible for managing the bus architecture and normal processing, and the memory 2720 can store data used by the processor 2700 when performing operations.

Optionally, the processor 2700 further reads the program and performs the following steps:
before receiving the second sensing data transmitted by the first device, transmitting first information to the first device, where the first information is used to request the second sensing data.

Optionally, the first device is the receiver, and the processor 2700 further reads the program and performs the following steps:
transmitting second information to a second device, where the second information is used to instruct the second device to transmit the information of the transmitter to the first device, and the second device is the transmitter.

Optionally, the first device is the transmitter, and the processor 2700 further reads the program and performs the following steps:
transmitting a third message to the second device, where the third message is used to instruct the second device to transmit the first sensing data to the first device, and the second device is the receiver.

It is to be noted here that the above device provided in the embodiment of the present disclosure can implement all the method steps implemented by the method embodiment shown in FIG. 18, and can achieve the same technical effects. The parts and beneficial effects of this embodiment that are the same as the method embodiment will not be described in detail here.

As shown in FIG. 28, another sensing result obtaining device according to one embodiment of the present disclosure is applied to a first network function, and includes: a processor 2800 used to read a program in a memory 2820 and perform the following process:
receiving information of a transmitter of a sensing signal, transmitted by the transmitter;
receiving first sensing data transmitted by a receiver of the sensing signal;
determining second sensing data according to the information of the transmitter and the first sensing data;
a transceiver 2810 used to receive and transmit data under the control of the processor 2800.

In FIG. 28, the processor 2800 is responsible for managing the bus architecture and normal processing, and the memory 2820 can store data used by the processor 2800 when performing operations.

Optionally, the processor 2800 further reads the program and performs the following steps:
before receiving the information of the transmitter of the sensing signal, transmitted by the transmitter, transmitting fourth information to the transmitter, where the fourth information is used to request the information of the transmitter;
before receiving first sensing data transmitted by a receiver of the sensing signal, transmitting fifth information to the receiver, where the fifth information is used to request the first sensing data.

It is to be noted here that the above device provided in the embodiment of the present disclosure can implement all the method steps implemented by the method embodiment shown in FIG. 19, and can achieve the same technical effects. The parts and beneficial effects of this embodiment that are the same as the method embodiment will not be described in detail here.

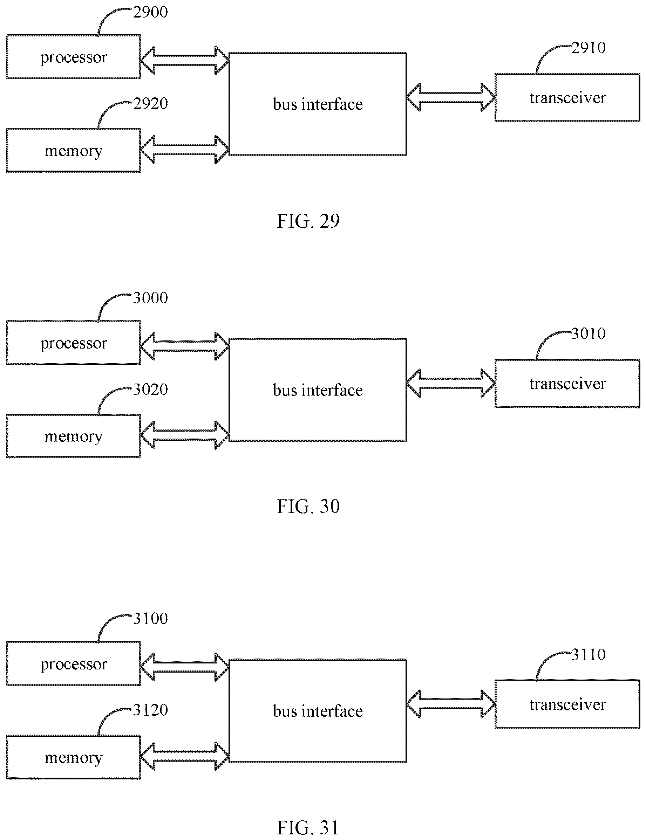

As shown in FIG. 29, a sensing result obtaining device according to one embodiment of the present disclosure is applied to a transmitter of a sensing signal, and includes: a processor 2900 used to read a program in a memory 2920 and perform the following process:
transmitting information of a transmitter to a first object, where the first object is a first network function or a receiver of a sensing signal;
a transceiver 2910 used to receive and transmit data under the control of the processor 2900.

In FIG. 29, the processor 2900 is responsible for managing the bus architecture and normal processing, and the memory 2920 can store data used by the processor 2900 when performing operations.

Optionally, the processor 2900 further reads the program and performs the following steps:
before transmitting information of a transmitter to a first object, receiving sixth information transmitted by the first object, where the sixth information is used to request information of the transmitter.

Optionally, the first object is the receiver, and the processor 2900 further reads the program and performs the following steps:
before transmitting information of a transmitter to a first object, receiving seventh information transmitted by the first network function, where the seventh information is used to instruct transmission of the information of the transmitter to the receiver.

It is to be noted here that the above device provided in the embodiment of the present disclosure can implement all the method steps implemented by the method embodiment shown in FIG. 20, and can achieve the same technical effect. The parts and beneficial effects of this embodiment that are the same as the method embodiment will not be described in detail here.

As shown in FIG. 30, another sensing result obtaining device according to one embodiment of the present disclosure is applied to a transmitter of a sensing signal, and includes: a processor 3000 used to read a program in a memory 3020 and perform the following process:
receiving first sensing data transmitted by a receiver of a sensing signal;
determining second sensing data based on the first sensing data and information of the transmitter;
transmitting the second sensing data to a first network function;
a transceiver 3010 used to receive and transmit data under the control of the processor 3000.

In FIG. 30, the processor 3000 is responsible for managing the bus architecture and normal processing, and the memory 3020 can store data used by the processor 3000 when performing operations.

Optionally, the processor 3000 further reads the program and performs the following steps:
before transmitting the second sensing data to a first network function, receiving first information transmitted by the first network function, where the first information is used to request the second sensing data.

Optionally, the processor 3000 further reads the program and performs the following steps:
before receiving first sensing data transmitted by a receiver of a sensing signal, transmit seventh information to the receiver of the sensing signal, where the seventh information is used to request the first sensing data.

It is to be noted here that the above device provided in the embodiment of the present disclosure can implement all the method steps implemented by the method embodiment shown in FIG. 21, and can achieve the same technical effect. The parts and beneficial effects of this embodiment that are the same as the method embodiment will not be described in detail here.

As shown in FIG. 31, a sensing result obtaining device according to one embodiment of the present disclosure is applied to a receiver of a sensing signal, and includes: a processor 3100 used to read a program in a memory 3120 and perform the following process:
receiving information of a transmitter of a sensing signal transmitted by the transmitter;
determining second sensing data based on the first sensing data obtained by the receiver and the information of the transmitter;
transmitting the second sensing data to the first network function;
a transceiver 3110 used to receive and transmit data under the control of the processor 3100.

In FIG. 31, the processor 3100 is responsible for managing the bus architecture and normal processing, and the memory 3120 can store data used by the processor 3100 when performing operations.

Optionally, the processor 3100 further reads the program and performs the following steps:
before sending the second sensing data to the first network function, receiving first information transmitted by the first network function, where the first information is used to request the second sensing data.

Optionally, the processor 3100 further reads the program and performs the following steps:
before receiving the information of the transmitter of the sensing signal transmitted by the transmitter, transmitting sixth information to the transmitter of the sensing signal, where the sixth information is used to request information of the transmitter of the sensing signal.

It is to be noted here that the above device provided in the embodiment of the present disclosure can implement all the method steps implemented by the method embodiment shown in FIG. 22, and can achieve the same technical effects. The parts and beneficial effects of this embodiment that are the same as the method embodiment will not be described in detail here.

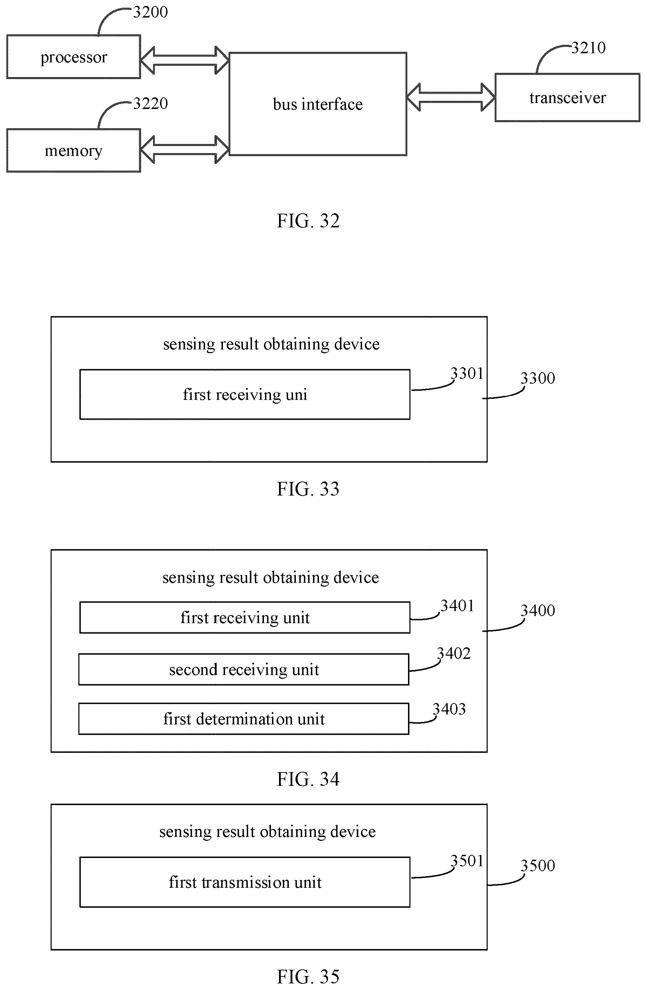

As shown in FIG. 32, another sensing result obtaining device according to one embodiment of the present disclosure is applied to a receiver of a sensing signal and includes: a processor 3200 used to read a program in a memory 3220 and perform the following process:
transmitting first sensing data obtained by the receiver to a transmitter of the sensing signal;
a transceiver 3210 used to receive and transmit data under the control of the processor 3200.

In FIG. 32, the processor 3200 is responsible for managing the bus architecture and normal processing, and the memory 3220 can store data used by the processor 3200 when performing operations.

Optionally, the processor 3200 further reads the program and performs the following steps:
before transmitting first sensing data obtained by the receiver to a transmitter of the sensing signal, receiving seventh information transmitted by the transmitter, where the seventh information is used to request the first sensing data.

Optionally, the processor 3200 further reads the program and performs the following steps:
before transmitting first sensing data obtained by the receiver to a transmitter of the sensing signal, receiving third information transmitted by the first network function, where the third information is used to instruct the receiver to transmit the first sensing data to the transmitter.

It is to be noted here that the above device provided in the embodiment of the present disclosure can implement all the method steps implemented by the method embodiment shown in FIG. 23, and can achieve the same technical effect. The parts and beneficial effects of this embodiment that are the same as the method embodiment will not be described in detail here.

As shown in FIG. 33, a sensing result obtaining device 3300 provided in another embodiment of the present disclosure is applied to a first network function and includes:
a first receiving unit 3301 used to receive second sensing data transmitted by a first device; where the second sensing data is determined by the first device based on information of a transmitter of a sensing signal and first sensing data obtained by a receiver of the sensing signal, and the first device is one of the transmitter and the receiver of the sensing signal.

Optionally, the above device further includes:
a first transmission unit used to, before receiving the second sensing data transmitted by the first device, transmit first information to the first device, where the first information is used to request the second sensing data.

Optionally, the first device is the receiver, and the device further includes:
a second transmission unit used to transmit second information to the second device, where the second information is used to instruct the second device to transmit the information of the transmitter to the first device, and the second device is the transmitter.

Optionally, the first device is the transmitter, and the device further includes:
a third transmission unit used to transmit a third message to the second device, where the third message is used to instruct the second device to transmit the first sensing data to the first device, and the second device is the receiver.

It is to be noted here that the above-mentioned device provided in the embodiment of the present disclosure can implement all the method steps implemented by the method embodiment shown in Figure 18, and can achieve the same technical effects. The parts and beneficial effects of this embodiment that are the same as the method embodiment will not be described in detail here.

As shown in FIG. 34, a sensing result obtaining device 3400 provided in another embodiment of the present disclosure is applied to a first network function, and includes:
a first receiving unit 3401 used to receive information of a transmitter of a sensing signal, transmitted by the transmitter;
a second receiving unit 3402 used to receive first sensing data transmitted by a receiver of the sensing signal;
a first determination unit 3403 used to determine second sensing data according to the information of the transmitter and the first sensing data.

Optionally, the above device further includes:
a first transmission unit used to, before receiving the information of the transmitter of the sensing signal transmitted by the transmitter, transmit fourth information to the transmitter of the sensing signal, where the fourth information is used to request information of the transmitter;
a second transmission unit used to, before receiving first sensing data transmitted by the receiver of the sensing signal, transmit fifth information to the receiver of the sensing signal, where the fifth information is used to request the first sensing data.

It is to be noted here that the above device provided in the embodiment of the present disclosure can implement all the method steps implemented by the method embodiment shown in FIG. 19, and can achieve the same technical effects. The parts and beneficial effects of this embodiment that are the same as the method embodiment will not be described in detail here.

As shown in FIG. 35, a sensing result obtaining device 3500 provided in another embodiment of the present disclosure is applied to a transmitter of a sensing signal and includes:
a first transmission unit 3501 used to transmit information of a transmitter to a first object, where the first object is a first network function or a receiver of a sensing signal.

Optionally, the above device further includes:
a first receiving unit used to, before transmitting the information of the transmitter to the first object, receive sixth information transmitted by the first object, where the sixth information is used to request information of the transmitter.

Optionally, the first object is the receiver, and the device further includes:
a second receiving unit used to, before transmitting the information of the transmitter to the first object, receive seventh information transmitted by the first network function, where the seventh information is used to instruct transmission of the information of the transmitter to the receiver.

It is to be noted here that the above device provided in the embodiment of the present disclosure can implement all the method steps implemented by the method embodiment shown in FIG. 20, and can achieve the same technical effects. The parts and beneficial effects of this embodiment that are the same as the method embodiment will not be described in detail here.

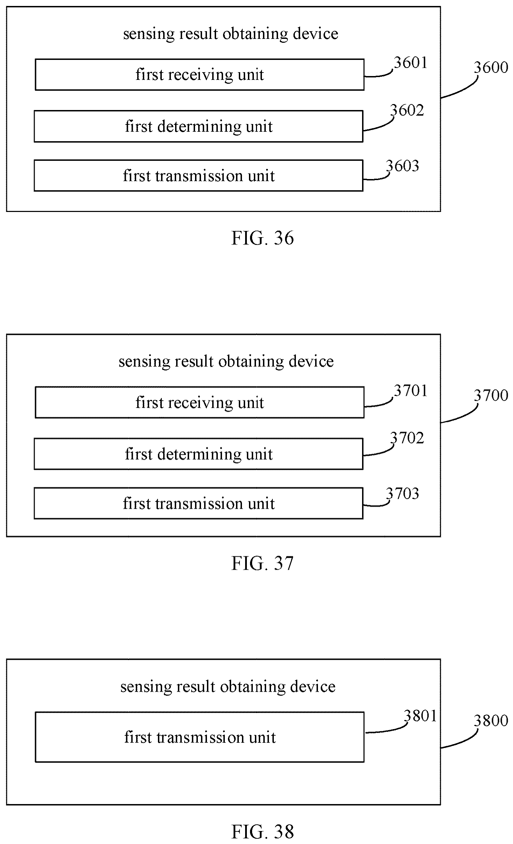

As shown in FIG. 36, a sensing result obtaining device 3600 provided in another embodiment of the present disclosure is applied to a transmitter of a sensing signal and includes:
a first receiving unit 3601 used to receive first sensing data transmitted by a receiver of a sensing signal;
a first determining unit 3602 used to determine second sensing data based on the first sensing data and information of the transmitter;
a first transmission unit 3603 used to transmit the second sensing data to a first network function.

Optionally, the above device further includes:
a second receiving unit used to, before transmitting the second sensing data to the first network function, receive first information transmitted by the first network function, where the first information is used to request the second sensing data.

Optionally, the above device further includes:
a second transmission unit used to, before receiving the first sensing data transmitted by the receiver of the sensing signal, transmit seventh information to the receiver of the sensing signal, where the seventh information is used to request the first sensing data.

It is to be noted here that the above device provided in the embodiment of the present disclosure can implement all the method steps implemented by the method embodiment shown in FIG. 21, and can achieve the same technical effects. The parts and beneficial effects of this embodiment that are the same as the method embodiment will not be described in detail here.

As shown in FIG. 37, a sensing result obtaining device 3700 provided in another embodiment of the present disclosure is applied to a receiver of a sensing signal and includes:
a first receiving unit 3701 used to receive information of a transmitter of a sensing signal transmitted by the transmitter;
a first determining unit 3702 used to determine second sensing data based on the first sensing data obtained by the receiver and the information of the transmitter;
a first transmission unit 3703 used to transmit the second sensing data to the first network function.

Optionally, the above device further includes:
a second receiving unit used to, before transmitting the second sensing data to the first network function, receive first information transmitted by the first network function, where the first information is used to request the second sensing data.

Optionally, the above device further includes:
a second transmission unit used to, before receiving the information of the transmitter of the sensing signal transmitted by the transmitter, transmit sixth information to the transmitter of the sensing signal, where the sixth information is used to request information of the transmitter of the sensing signal.

It is to be noted here that the above device provided in the embodiment of the present disclosure can implement all the method steps implemented by the method embodiment shown in FIG. 22, and can achieve the same technical effect. The parts and beneficial effects of this embodiment that are the same as the method embodiment will not be described in detail here.

As shown in FIG. 38, a sensing result obtaining device 3800 provided in another embodiment of the present disclosure is applied to a receiver of a sensing signal and includes:
a first transmission unit 3801 used to transmit first sensing data obtained by the receiver to a transmitter of the sensing signal.

Optionally, the above device further includes:
a first receiving unit used to, before transmitting first sensing data obtained by the receiver to a transmitter of the sensing signal, receive seventh information transmitted by the transmitter, where the seventh information is used to request the first sensing data.

Optionally, the above device further includes:
a second receiving unit used to, before transmitting first sensing data obtained by the receiver to a transmitter of the sensing signal, receive third information transmitted by the first network function, where the third information is used to instruct the receiver to transmit the first sensing data to the transmitter.

It is to be noted here that the above device provided in the embodiment of the present disclosure can implement all the method steps implemented by the method embodiment shown in FIG. 23, and can achieve the same technical effect. The parts and beneficial effects of this embodiment that are the same as the method embodiment will not be described in detail here.

It is to be noted that the technical solutions provided in the embodiments of the present disclosure may be applicable to various systems, especially the fifth generation communication (5G) system. For example, applicable systems may be global system of mobile communication (GSM) system, code division multiple access (CDMA) system, wideband code division multiple access (WCDMA) general packet wireless service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. Each of the various systems includes a user equipment and a network device. The system may further include a core network part, such as an evolved packet system (EPS), a 5G system (5GS).

Terminal devices involved in the embodiments of the present disclosure may be a device that provides voice and/or data connectivity to a user, a handheld device with a wireless connection function, or other processing device coupled to a wireless modem. In different systems, names of terminal devices may be different. For example, in the 5G system, the terminal device may be referred as user equipment (UE). A wireless terminal device may communicate with one or more core networks (CN) via a radio access network (RAN). The wireless terminal device may be a mobile terminal device such as a mobile phone (or referred as cell phone), or a computer with a mobile terminal device, such as a portable, pocket-sized, handheld, computer built-in or vehicle-mounted mobile device, which exchange language and/or data with wireless access networks, for example, a personal communication service (PCS) phone, a cordless phone, a session initiated protocol (SIP) phone, a wireless local loop (WLL) station, a personal digital assistant (PDA) and other device. The wireless terminal device may also be referred to as system, or subscriber unit, or subscriber station, or mobile station, or mobile, or remote station, or access point, or remote UE, or access UE, or user UE, or user agent, or user device, which are not limited in the embodiments of the present disclosure.

The network device involved in the embodiments of the present disclosure may be a base station, and the base station may include a plurality of cells for providing services for the UE. According to different specific application scenarios, the base station may also be referred as an access point, or the base station may be a device in an access network that communicates with wireless terminal devices through one or more sectors on air interfaces, or other names. The network device may be used to exchange received frames with internet protocol (IP) packets, and act as a router between the wireless terminal device and the rest of the access network, where the rest of the access network may include an internet protocol (IP) communication network. The network device may also coordinate attribute management for air interfaces. For example, the network device involved in the embodiments of the present disclosure may be a base transceiver station (BTS) in global system for mobile communications (GSM) or code division multiple access (CDMA), or a NodeB in wide-band code division multiple access (WCDMA), or an evolutional Node B (eNB or e-NodeB) in long term evolution (LTE) system, or a 5G base station (gNB) in the 5G network architecture (next generation system), or a home evolved Node B (HeNB), or a relay node, or a femto, or a pico, which are not limited in the embodiments of the present disclosure. In some network structures, the network device may include a centralized unit (CU) node and a distributed unit (DU) node; and the centralized unit and the distributed unit may also be geographically separated.

Each of the network device and the UE can use one or more antennas for multi input multi output (MIMO) transmission between the network device and the UE. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

In one embodiment of the present disclosure, a bus architecture may include any number of interconnected bus and bridge. Specifically, various circuits of one or more processors, which are represented by the processor, and one or more memories, which are represented by the memory, are linked together. The bus architecture may link various other circuits, such as a peripheral device, voltage regulator and a power management circuit together. These features are well known in this field; therefore, the present disclosure does not make further description on these features. The bus interface provides an interface. The transceiver may be multiple elements, including a transmitter and a receiver and provide units, which communicate with other devices on the transmission medium. The processor is responsible for managing the bus architecture and the normal processing. The memory may be used to store data used by the processor for performing operations.

The processor may be a central processing unit (CPU), an application specific integrated circuit (ASIC), a field-programmable gate array (FPGA) or a complex programmable logic device (CPLD). The processor may also adopt multi-core architecture.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

One embodiment of the present disclosure also provides a processor-readable storage medium, including a program stored thereon. When the program is executed by a processor, each process of the above method embodiment is implemented, and the same technical effect can be achieved., which is not repeated here to avoid repetition. The readable storage medium can be any available medium or data storage device that can be accessed by the processor, including but not limited to magnetic storage (such as floppy disk, hard disk, tape, magneto-optical (MO)), optical storage (such as compact disc (CD), high-density digital video disc (DVD), Blu-ray Disc (BD), high-definition universal disc (HVD), etc.), and semiconductor storage (such as ROM, erasable programmable read-only memory (Erasable PROM, EPROM), electrically erasable programmable read-only memory (EEPROM), non-volatile memory (NAND FLASH), solid state drive (SSD)), etc.

It is to be noted that terms such as "including" and "having" and any variations thereof are intended to cover non-exclusive inclusion, so that a process, method, product or device including a series of elements is not limited to the elements that are clearly listed and may include other elements that are not clearly listed or are inherent to the process, method, product, or device. Without further limitation, an element defined by the phrase "including one..." does not exclude the presence of additional identical elements in the process, method, article, or device that includes that element.

Through the description of the above embodiments, those skilled in the art can clearly understand that the method of the above embodiments can be implemented through software plus a necessary general-purpose hardware platform, and of course can also be implemented via hardware. However, in many cases, the former is a better implementation manner. Based on such understanding, the technical solution of the present disclosure, in essence, or the part that contributes to the related technologies may be embodied in the form of a software product. This computer software product is stored in a storage medium (such as ROM/RAM, a disk, an optical disc) and includes a plurality of instructions for causing a terminal device (which may be a mobile phone, a computer, a server, an air conditioner, or a network device, etc.) to execute the methods described in the various embodiments of the present disclosure.

It is to be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Embodiments of the present disclosure have been described above in conjunction with the accompanying drawings. However, the present disclosure is not limited to the above-described specific implementations, which are merely illustrative rather than restrictive. Those of ordinary skill in the art, inspired by the present disclosure, may still develop many forms without departing from the spirit of the present disclosure and the scope protected by the claims, all of which shall fall within the protection scope of the present disclosure.

## Claims

1. A sensing configuration method, applied to a first network function, comprising:
transmitting first information to a first network device; wherein the first information is used to instruct transmission of sensing signal configuration information corresponding to a first device to the first device, and the first device includes a transmitter and/or receiver of a sensing signal.

2. The method according to claim 1, wherein the first information is identification information of the first device.

3. The method according to claim 1 or 2, wherein the transmitting first information to a first network device, includes:
transmitting a first message to the first network device; wherein the first message is used to instruct the first network device to determine the sensing signal configuration information, and the first message includes the first information.

4. The method according to claim 1 or 2, further comprising:
receiving second information or third information transmitted by the first network device; wherein the second information is used to indicate that the first network device successfully configures the sensing signal for the first device, the third information is used to indicate that the first network device fails to configure the sensing signal for the first device.

5. The method according to claim 3, further comprising:
receiving the sensing signal configuration information or fourth information transmitted by the first network device; wherein the fourth information is used to indicate that the first network device fails to determine the sensing signal configuration information.

6. The method according to claim 5, wherein the first device is one of the transmitter and the receiver, and the method further includes:
transmitting sensing signal configuration information corresponding to a second device to the second device, wherein the second device is the other of the transmitter and the receiver.

7. The method according to claim 6, further comprising:
receiving fifth information or sixth information transmitted by the second device; wherein the fifth information is used to indicate that the sensing signal configuration for the second device is successful, and the sixth information is used to indicate that the sensing signal configuration for the second device fails.

8. A sensing configuration method, applied to a first network device, comprising:
receiving first information transmitted by a first network function; wherein the first information is used to instruct transmission of sensing signal configuration information corresponding to a first device to the first device, and the first device includes a transmitter and/or receiver of the sensing signal;
transmitting corresponding sensing signal configuration information to the first device according to the first information.

9. The method according to claim 8, wherein the first information is identification information of the first device.

10. The method according to claim 8 or 9, wherein the receiving first information transmitted by a first network function, includes:
receiving a first message transmitted by the first network function, wherein the first message is used to instruct the first network device to determine sensing signal configuration information, and the first message includes the first information;
wherein the method further includes:
determining the sensing signal configuration information according to the first message.

11. The method according to claim 8, further comprising:
determining the sensing signal configuration information according to the first information.

12. The method according to claim 8 or 9, further comprising:
receiving seventh information transmitted by the first device, and transmitting second information to the first network function; wherein the seventh information is used to indicate that the sensing signal configuration for the first device is successful, and the second information is used to indicate that the first network device successfully configures the sensing signal for the first device;
or,
receiving eighth information transmitted by the first device, and transmitting third information to the first network function; wherein the eighth information is used to indicate that the sensing signal configuration for the first device is failed, and the third information is used to indicate that the first network device fails to configure the sensing signal for the first device.

13. The method according to claim 10 or 11, further comprising:
when failing to determining the sensing signal configuration information, transmitting fourth information to the first network function, wherein the fourth information is used to indicate that the first network device fails to determine the sensing signal configuration information;
when the sensing signal configuration information is successfully determined, transmitting the sensing signal configuration information to the first network function.

14. The method according to claim 8, wherein the first device is one of the transmitter and the receiver, and the method further includes:
transmitting sensing signal configuration information corresponding to a second device to the first device, wherein the second device is the other of the transmitter and the receiver;
receiving ninth information transmitted by the first device, and transmitting tenth information to the first network function; wherein the ninth information is used to indicate that the sensing signal configuration for the second device is successful, and the tenth information is used to indicate that the first network device successfully configures the sensing signal to the second device; or, receiving eleventh information transmitted by the first device, and transmitting twelfth information to the first network function, wherein the eleventh information is used to indicate that the sensing signal configuration for the second device is failed, and the twelfth information is used to indicate that the first network device fails to configure the sensing signal for the second device.

15. A sensing configuration method applied to a first device which is one of a transmitter and a receiver of a sensing signal, comprising:
receiving sensing signal configuration information corresponding to the first device transmitted by a first network device, wherein the sensing signal configuration information corresponding to the first device is transmitted by the first network device according to first information transmitted by a first network function;
configuring a sensing signal according to the sensing signal configuration information corresponding to the first device.

16. The method according to claim 15, further comprising:
transmitting seventh information or eighth information to the first network device, wherein the seventh information is used to indicate that the sensing signal configuration for the first device is successful, and the eighth information is used to indicate that the sensing signal configuration for the first device is failed.

17. The method according to claim 15, further comprising:
receiving sensing signal configuration information corresponding to a second device transmitted by the first network device, wherein the second device is the other of the transmitter and the receiver;
transmitting the sensing signal configuration information corresponding to the second device to the second device;
receiving ninth information transmitted by the second device, and transmitting the ninth information to the first network device; wherein the ninth information is used to indicate that the sensing signal configuration for the second device is successful; or, receiving the eleventh information transmitted by the second device, and forwarding the eleventh information to the first network device, wherein the eleventh information is used to indicate that the sensing signal configuration for the second device is failed.

18. A sensing configuration device, applied to a first network function, comprising: a memory, a transceiver, and a processor;
wherein the memory is used to store a computer program; the transceiver is used to transmit and receive data under the control of the processor; and the processor is used to read the computer program in the memory and perform the following operations:
transmitting first information to a first network device; wherein the first information is used to instruct transmission of sensing signal configuration information corresponding to a first device to the first device, and the first device includes a transmitter and/or receiver of a sensing signal.

19. The device according to claim 18, wherein the first information is identification information of the first device.

20. The device according to claim 18 or 19, wherein the processor further reads the program and performs the following steps:
transmitting a first message to the first network device; wherein the first message is used to instruct the first network device to determine the sensing signal configuration information, and the first message includes the first information.

21. The device according to claim 18 or 19, wherein the processor further reads the program and performs the following steps:
receiving second information or third information transmitted by the first network device; wherein the second information is used to indicate that the first network device successfully configures the sensing signal for the first device, the third information is used to indicate that the first network device fails to configure the sensing signal for the first device.

22. The device according to claim 20, wherein the processor further reads the program and performs the following steps:
receiving the sensing signal configuration information or fourth information transmitted by the first network device; wherein the fourth information is used to indicate that the first network device fails to determine the sensing signal configuration information.

23. The device according to claim 22, wherein the first device is one of the transmitter and the receiver, and the processor further reads the program and performs the following steps:
transmitting sensing signal configuration information corresponding to a second device to the second device, wherein the second device is the other of the transmitter and the receiver.

24. The device according to claim 23, wherein the processor further reads the program and performs the following steps:
receiving fifth information or sixth information transmitted by the second device; wherein the fifth information is used to indicate that the sensing signal configuration for the second device is successful, and the sixth information is used to indicate that the sensing signal configuration for the second device fails.

25. A sensing configuration device, applied to a first network function, comprising:
a first transmission unit used to transmit first information to a first network device; wherein the first information is used to instruct transmission of sensing signal configuration information corresponding to a first device to the first device, and the first device includes a transmitter and/or receiver of a sensing signal.

26. The device according to claim 25, wherein the first information is identification information of the first device.

27. The device according to claim 25 or 26, wherein the first transmission unit is further used to:
transmit a first message to the first network device; wherein the first message is used to instruct the first network device to determine the sensing signal configuration information, and the first message includes the first information.

28. The device according to claim 25 or 26, further comprising:
a first receiving unit used to receive second information or third information transmitted by the first network device; wherein the second information is used to indicate that the first network device successfully configures the sensing signal for the first device, the third information is used to indicate that the first network device fails to configure the sensing signal for the first device.

29. The device according to claim 27, further comprising:
a second receiving unit used to receive the sensing signal configuration information or fourth information transmitted by the first network device; wherein the fourth information is used to indicate that the first network device fails to determine the sensing signal configuration information.

30. The device according to claim 29, wherein the first device is one of the transmitter and the receiver, and the device further comprises:
a second transmission unit used to transmit sensing signal configuration information corresponding to a second device to the second device, wherein the second device is the other of the transmitter and the receiver.

31. The device according to claim 30, further comprising:
a third receiving unit used to receive fifth information or sixth information transmitted by the second device; wherein the fifth information is used to indicate that the sensing signal configuration for the second device is successful, and the sixth information is used to indicate that the sensing signal configuration for the second device fails.

32. A sensing configuration device, applied to a first network device, comprising: a memory, a transceiver, and a processor;
wherein the memory is used to store a computer program; the transceiver is used to transmit and receive data under the control of the processor; and the processor is used to read the computer program in the memory and perform the following operations:
receiving first information transmitted by a first network function; wherein the first information is used to instruct transmission of sensing signal configuration information corresponding to a first device to the first device, and the first device includes a transmitter and/or receiver of the sensing signal;
transmitting corresponding sensing signal configuration information to the first device according to the first information.

33. The device according to claim 32, wherein the first information is identification information of the first device.

34. The device according to claim 32 or 33, wherein the processor further reads the program and performs the following steps:
receiving a first message transmitted by the first network function, wherein the first message is used to instruct the first network device to determine sensing signal configuration information, and the first message includes the first information;
determining the sensing signal configuration information according to the first message.

35. The device according to claim 32, wherein the processor further reads the program and performs the following steps:
determining the sensing signal configuration information according to the first information.

36. The device according to claim 32 or 33, wherein the processor further reads the program and performs the following steps:
receiving seventh information transmitted by the first device, and transmitting second information to the first network function; wherein the seventh information is used to indicate that the sensing signal configuration for the first device is successful, and the second information is used to indicate that the first network device successfully configures the sensing signal for the first device;
or,
receiving eighth information transmitted by the first device, and transmitting third information to the first network function; wherein the eighth information is used to indicate that the sensing signal configuration for the first device is failed, and the third information is used to indicate that the first network device fails to configure the sensing signal for the first device.

37. The device according to claim 34 or 35, wherein the processor further reads the program and performs the following steps:
when failing to determining the sensing signal configuration information, transmitting fourth information to the first network function, wherein the fourth information is used to indicate that the first network device fails to determine the sensing signal configuration information;
when the sensing signal configuration information is successfully determined, transmitting the sensing signal configuration information to the first network function.

38. The device according to claim 32, wherein the first device is one of the transmitter and the receiver, and the processor further reads the program and performs the following steps:
transmitting sensing signal configuration information corresponding to a second device to the first device, wherein the second device is the other of the transmitter and the receiver;
receiving ninth information transmitted by the first device, and transmitting tenth information to the first network function; wherein the ninth information is used to indicate that the sensing signal configuration for the second device is successful, and the tenth information is used to indicate that the first network device successfully configures the sensing signal to the second device; or, receiving eleventh information transmitted by the first device, and transmitting twelfth information to the first network function, wherein the eleventh information is used to indicate that the sensing signal configuration for the second device is failed, and the twelfth information is used to indicate that the first network device fails to configure the sensing signal for the second device.

39. A sensing configuration device, applied to a first network device, comprising:
a first receiving unit used to receive first information transmitted by a first network function; wherein the first information is used to instruct transmission of sensing signal configuration information corresponding to a first device to the first device, and the first device includes a transmitter and/or receiver of the sensing signal;
a first transmission unit used to transmit corresponding sensing signal configuration information to the first device according to the first information.

40. The device according to claim 39, wherein the first information is identification information of the first device.

41. The device according to claim 39 or 40, wherein the first transmission unit is further used to:
receive a first message transmitted by the first network function, wherein the first message is used to instruct the first network device to determine sensing signal configuration information, and the first message includes the first information;
the device further includes:
a first determining unit used to determine the sensing signal configuration information according to the first message.

42. The device according to claim 39, further comprising:
a second determining unit used to determine the sensing signal configuration information according to the first information.

43. The device according to claim 39 or 40, further comprising:
a second receiving unit used to receive seventh information transmitted by the first device, and transmitting second information to the first network function; wherein the seventh information is used to indicate that the sensing signal configuration for the first device is successful, and the second information is used to indicate that the first network device successfully configures the sensing signal for the first device;
or,
a third receiving unit used to receive eighth information transmitted by the first device, and transmitting third information to the first network function; wherein the eighth information is used to indicate that the sensing signal configuration for the first device is failed, and the third information is used to indicate that the first network device fails to configure the sensing signal for the first device.

44. The device according to claim 41 or 42, further comprising a second transmission unit used to:
when failing to determining the sensing signal configuration information, transmit fourth information to the first network function, wherein the fourth information is used to indicate that the first network device fails to determine the sensing signal configuration information;
when the sensing signal configuration information is successfully determined, transmit the sensing signal configuration information to the first network function.

45. The device according to claim 39, wherein the first device is one of the transmitter and the receiver, and the device further comprises:
a third transmission unit used to transmit sensing signal configuration information corresponding to a second device to the first device, wherein the second device is the other of the transmitter and the receiver;
a transceiver processing unit used to receive ninth information transmitted by the first device, and transmit tenth information to the first network function; wherein the ninth information is used to indicate that the sensing signal configuration for the second device is successful, and the tenth information is used to indicate that the first network device successfully configures the sensing signal to the second device; or, receive eleventh information transmitted by the first device, and transmit twelfth information to the first network function, wherein the eleventh information is used to indicate that the sensing signal configuration for the second device is failed, and the twelfth information is used to indicate that the first network device fails to configure the sensing signal for the second device.

46. A sensing configuration device applied to a first device which is one of a transmitter and a receiver of a sensing signal, comprising: a memory, a transceiver, and a processor;
wherein the memory is used to store a computer program; the transceiver is used to transmit and receive data under the control of the processor; and the processor is used to read the computer program in the memory and perform the following operations:
receiving sensing signal configuration information corresponding to the first device transmitted by a first network device, wherein the sensing signal configuration information corresponding to the first device is transmitted by the first network device according to first information transmitted by a first network function;
configuring a sensing signal according to the sensing signal configuration information corresponding to the first device.

47. The device according to claim 46, wherein the processor further reads the program and performs the following steps:
transmitting seventh information or eighth information to the first network device, wherein the seventh information is used to indicate that the sensing signal configuration for the first device is successful, and the eighth information is used to indicate that the sensing signal configuration for the first device is failed.

48. The device according to claim 46, wherein the processor further reads the program and performs the following steps:
receiving sensing signal configuration information corresponding to a second device transmitted by the first network device, wherein the second device is the other of the transmitter and the receiver;
transmitting the sensing signal configuration information corresponding to the second device to the second device;
receiving ninth information transmitted by the second device, and transmitting the ninth information to the first network device; wherein the ninth information is used to indicate that the sensing signal configuration for the second device is successful; or, receiving the eleventh information transmitted by the second device, and forwarding the eleventh information to the first network device, wherein the eleventh information is used to indicate that the sensing signal configuration for the second device is failed.

49. A sensing configuration device applied to a first device which is one of a transmitter and a receiver of a sensing signal, comprising:
a first receiving unit used to receive sensing signal configuration information corresponding to the first device transmitted by a first network device, wherein the sensing signal configuration information corresponding to the first device is transmitted by the first network device according to first information transmitted by a first network function;
a first configuration unit used to configure a sensing signal according to the sensing signal configuration information corresponding to the first device.

50. The device according to claim 49, further comprising:
a first transmission unit used to transmit seventh information or eighth information to the first network device, wherein the seventh information is used to indicate that the sensing signal configuration for the first device is successful, and the eighth information is used to indicate that the sensing signal configuration for the first device is failed.

51. The device according to claim 49, further comprising:
a second receiving unit used to receive sensing signal configuration information corresponding to a second device transmitted by the first network device, wherein the second device is the other of the transmitter and the receiver;
a second transmission unit used to transmit the sensing signal configuration information corresponding to the second device to the second device;
a transceiver processing unit used to receive ninth information transmitted by the second device, and transmitting the ninth information to the first network device; wherein the ninth information is used to indicate that the sensing signal configuration for the second device is successful; or, receiving the eleventh information transmitted by the second device, and forwarding the eleventh information to the first network device, wherein the eleventh information is used to indicate that the sensing signal configuration for the second device is failed.

52. A processor-readable storage medium storing a computer program, wherein the computer program causes a processor to execute the method according to any one of claims 1 to 17.

53. A sensing result obtaining method applied to a first network function, comprising:
receiving second sensing data transmitted by a first device; wherein the second sensing data is determined by the first device based on information of a transmitter of a sensing signal and first sensing data obtained by a receiver of the sensing signal, and the first device is one of the transmitter and the receiver of the sensing signal.

54. The method according to claim 53, wherein before receiving the second sensing data transmitted by the first device, the method further includes:
transmitting first information to the first device, wherein the first information is used to request the second sensing data.

55. The method according to claim 53 or 54, wherein the first device is the receiver, and the method further includes:
transmitting second information to the second device, wherein the second information is used to instruct the second device to transmit the information of the transmitter to the first device.

56. The method according to claim 53 or 54, wherein the first device is the transmitter, and the method further includes:
transmitting a third message to the second device, wherein the third message is used to instruct the second device to transmit the first sensing data to the first device.

57. A sensing result obtaining method applied to a first network function, comprising:
receiving information of a transmitter of a sensing signal, transmitted by the transmitter;
receiving first sensing data transmitted by a receiver of the sensing signal;
determining second sensing data according to the information of the transmitter and the first sensing data.

58. The method according to claim 57, wherein:
before receiving the information of the transmitter of the sensing signal, transmitted by the transmitter, the method further includes: transmitting fourth information to the transmitter of the sensing signal, wherein the fourth information is used to request information of the transmitter;
before receiving the first sensing data transmitted by the receiver of the sensing signal, the method further includes: transmitting fifth information to the receiver of the sensing signal, wherein the fifth information is used to request the first sensing data.

59. A sensing result obtaining method applied to a transmitter of a sensing signal, comprising:
transmitting information of a transmitter to a first object, wherein the first object is a first network function or a receiver of a sensing signal.

60. The method according to claim 59, wherein before transmitting the information of the transmitter to the first object, the method further includes:
receiving sixth information transmitted by the first object, wherein the sixth information is used to request information of the transmitter.

61. The method according to claim 59, wherein the first object is the receiver, and before transmitting the information of the transmitter to the first object, the method further includes:
receiving seventh information transmitted by the first network function, wherein the seventh information is used to instruct transmission of the information of the transmitter to the receiver.

62. A sensing result obtaining method applied to a transmitter of a sensing signal, comprising:
receiving first sensing data transmitted by a receiver of a sensing signal;
determining second sensing data based on the first sensing data and information of the transmitter;
transmitting the second sensing data to a first network function.

63. The method according to claim 62, wherein before transmitting the second sensing data to the first network function, the method further includes:
receiving first information transmitted by the first network function, wherein the first information is used to request the second sensing data.

64. The method according to claim 63, wherein before receiving first sensing data transmitted by the receiver of the sensing signal, the method further includes:
transmitting seventh information to the receiver of the sensing signal, wherein the seventh information is used to request the first sensing data.

65. A sensing result obtaining method applied to a receiver of a sensing signal, comprising:
receiving information of a transmitter of a sensing signal transmitted by the transmitter;
determining second sensing data based on the first sensing data obtained by the receiver and the information of the transmitter;
transmitting the second sensing data to the first network function.

66. The method according to claim 65, wherein before transmitting the second sensing data to the first network function, the method further includes:
receiving first information transmitted by the first network function, wherein the first information is used to request the second sensing data.

67. The method according to claim 66, wherein before receiving information of the transmitter of the sensing signal transmitted by the transmitter, the method further includes:
transmitting sixth information to the transmitter of the sensing signal, wherein the sixth information is used to request information of the transmitter of the sensing signal.

68. A sensing result obtaining method applied to a receiver of a sensing signal, comprising:
transmitting first sensing data obtained by the receiver to a transmitter of the sensing signal.

69. The method according to claim 68, wherein before transmitting first sensing data obtained by the receiver to a transmitter of the sensing signal, the method further includes:
receiving seventh information transmitted by the transmitter, wherein the seventh information is used to request the first sensing data.

70. The method according to claim 68, wherein before transmitting first sensing data obtained by the receiver to a transmitter of the sensing signal, the method further includes:
receiving third information transmitted by the first network function, wherein the third information is used to instruct the receiver to transmit the first sensing data to the transmitter.

71. A sensing result obtaining device, applied to a first network function, comprising: a memory, a transceiver, and a processor;
wherein the memory is used to store a computer program; the transceiver is used to transmit and receive data under the control of the processor; and the processor is used to read the computer program in the memory and perform the following operations:
receiving second sensing data transmitted by a first device; wherein the second sensing data is determined by the first device based on information of a transmitter of a sensing signal and first sensing data obtained by a receiver of the sensing signal, and the first device is one of the transmitter and the receiver of the sensing signal.

72. The device according to claim 71, wherein the processor further reads the program and performs the following steps:
transmitting first information to the first device, wherein the first information is used to request the second sensing data.

73. The device according to claim 71 or 72, wherein the first device is the receiver, and the processor further reads the program and performs the following steps:
transmitting second information to the second device, wherein the second information is used to instruct the second device to transmit the information of the transmitter to the first device.

74. The device according to claim 71 or 72, wherein the first device is the transmitter, and the processor further reads the program and performs the following steps:
transmitting a third message to the second device, wherein the third message is used to instruct the second device to transmit the first sensing data to the first device.

75. A sensing result obtaining device applied to a first network function, comprising:
a first receiving unit used to receive second sensing data transmitted by a first device; wherein the second sensing data is determined by the first device based on information of a transmitter of a sensing signal and first sensing data obtained by a receiver of the sensing signal, and the first device is one of the transmitter and the receiver of the sensing signal.

76. The device according to claim 75, further comprising:
a first transmission unit used to, before receiving the second sensing data transmitted by the first device, transmit first information to the first device, wherein the first information is used to request the second sensing data.

77. The device according to claim 75 or 76, wherein the first device is the receiver, and the device further includes:
a second transmission unit used to transmit second information to the second device, wherein the second information is used to instruct the second device to transmit the information of the transmitter to the first device.

78. The device according to claim 75 or 76, wherein the first device is the transmitter, and the device further includes:
a third transmission unit used to transmit a third message to the second device, wherein the third message is used to instruct the second device to transmit the first sensing data to the first device.

79. A sensing result obtaining device applied to a first network function, comprising: a memory, a transceiver, and a processor;
wherein the memory is used to store a computer program; the transceiver is used to transmit and receive data under the control of the processor; and the processor is used to read the computer program in the memory and perform the following operations:
receiving information of a transmitter of a sensing signal, transmitted by the transmitter;
receiving first sensing data transmitted by a receiver of the sensing signal;
determining second sensing data according to the information of the transmitter and the first sensing data.

80. The device according to claim 79, wherein the processor further reads the program and performs the following steps:
before receiving the information of the transmitter of the sensing signal, transmitted by the transmitter, transmitting fourth information to the transmitter of the sensing signal, wherein the fourth information is used to request information of the transmitter.
before receiving the first sensing data transmitted by the receiver of the sensing signal, transmitting fifth information to the receiver of the sensing signal, wherein the fifth information is used to request the first sensing data.

81. A sensing result obtaining device applied to a first network function, comprising:
a first receiving unit used to receive information of a transmitter of a sensing signal, transmitted by the transmitter;
a second receiving unit used to receive first sensing data transmitted by a receiver of the sensing signal;
a first determining unit used to determine second sensing data according to the information of the transmitter and the first sensing data.

82. The device according to claim 81, further comprising:
a first transmission unit used to, before receiving the information of the transmitter of the sensing signal, transmitted by the transmitter, transmitting fourth information to the transmitter of the sensing signal, wherein the fourth information is used to request information of the transmitter;
a second transmission unit used to, before receiving the first sensing data transmitted by the receiver of the sensing signal, transmitting fifth information to the receiver of the sensing signal, wherein the fifth information is used to request the first sensing data.

83. A sensing result obtaining method applied to a transmitter of a sensing signal, comprising: a memory, a transceiver, and a processor;
wherein the memory is used to store a computer program; the transceiver is used to transmit and receive data under the control of the processor; and the processor is used to read the computer program in the memory and perform the following operations:
transmitting information of a transmitter to a first object, wherein the first object is a first network function or a receiver of a sensing signal.

84. The device according to claim 83, wherein the processor further reads the program and performs the following steps:
before transmitting the information of the transmitter to the first object, receiving sixth information transmitted by the first object, wherein the sixth information is used to request information of the transmitter.

85. The device according to claim 83, wherein the first object is the receiver, and the processor further reads the program and performs the following steps:
before transmitting the information of the transmitter to the first object, receiving seventh information transmitted by the first network function, wherein the seventh information is used to instruct transmission of the information of the transmitter to the receiver.

86. A sensing result obtaining device applied to a transmitter of a sensing signal, comprising:
a first transmission unit used to transmit information of a transmitter to a first object, wherein the first object is a first network function or a receiver of a sensing signal.

87. The device according to claim 86, further comprising:
a first receiving unit used to receive sixth information transmitted by the first object, wherein the sixth information is used to request information of the transmitter.

88. The device according to claim 86, further comprising:
a second receiving unit used to receive seventh information transmitted by the first network function, wherein the seventh information is used to instruct transmission of the information of the transmitter to the receiver.

89. A sensing result obtaining method applied to a transmitter of a sensing signal, comprising: a memory, a transceiver, and a processor;
wherein the memory is used to store a computer program; the transceiver is used to transmit and receive data under the control of the processor; and the processor is used to read the computer program in the memory and perform the following operations:
receiving first sensing data transmitted by a receiver of a sensing signal;
determining second sensing data based on the first sensing data and information of the transmitter;
transmitting the second sensing data to a first network function.

90. The device according to claim 89, wherein the processor further reads the program and performs the following steps:
before transmitting the second sensing data to the first network function, receiving first information transmitted by the first network function, wherein the first information is used to request the second sensing data.

91. The device according to claim 90, wherein the processor further reads the program and performs the following steps:
before receiving first sensing data transmitted by the receiver of the sensing signal, transmitting seventh information to the receiver of the sensing signal, wherein the seventh information is used to request the first sensing data.

92. A sensing result obtaining device applied to a transmitter of a sensing signal, comprising:
a first receiving unit used to receive first sensing data transmitted by a receiver of a sensing signal;
a first determining unit used to determine second sensing data based on the first sensing data and information of the transmitter;
a first transmission unit used to transmit the second sensing data to a first network function.

93. The device according to claim 92, further comprising:
a second receiving unit used to, before transmitting the second sensing data to the first network function, receive first information transmitted by the first network function, wherein the first information is used to request the second sensing data.

94. The device according to claim 93, further comprising:
a second transmission unit used to, before receiving first sensing data transmitted by the receiver of the sensing signal, transmit seventh information to the receiver of the sensing signal, wherein the seventh information is used to request the first sensing data.

95. A sensing result obtaining method applied to a receiver of a sensing signal, comprising: a memory, a transceiver, and a processor;
wherein the memory is used to store a computer program; the transceiver is used to transmit and receive data under the control of the processor; and the processor is used to read the computer program in the memory and perform the following operations:
receiving information of a transmitter of a sensing signal transmitted by the transmitter;
determining second sensing data based on the first sensing data obtained by the receiver and the information of the transmitter;
transmitting the second sensing data to the first network function.

96. The device according to claim 95, wherein the processor further reads the program and performs the following steps:
before transmitting the second sensing data to the first network function, receiving first information transmitted by the first network function, wherein the first information is used to request the second sensing data.

97. The device according to claim 96, wherein the processor further reads the program and performs the following steps:
before receiving information of the transmitter of the sensing signal transmitted by the transmitter, transmitting sixth information to the transmitter of the sensing signal, wherein the sixth information is used to request information of the transmitter of the sensing signal.

98. A sensing result obtaining method applied to a receiver of a sensing signal, comprising:
a first receiving unit used to receive information of a transmitter of a sensing signal transmitted by the transmitter;
a first determining unit used to determine second sensing data based on the first sensing data obtained by the receiver and the information of the transmitter;
a first transmission unit used to transmit the second sensing data to the first network function.

99. The device according to claim 98, further comprising:
a second receiving unit used to, before transmitting the second sensing data to the first network function, receive first information transmitted by the first network function, wherein the first information is used to request the second sensing data.

100. The device according to claim 99, further comprising:
a second transmission unit used to, before receiving information of the transmitter of the sensing signal transmitted by the transmitter, transmit sixth information to the transmitter of the sensing signal, wherein the sixth information is used to request information of the transmitter of the sensing signal.

101. A sensing result obtaining device applied to a receiver of a sensing signal, comprising: a memory, a transceiver, and a processor;
wherein the memory is used to store a computer program; the transceiver is used to transmit and receive data under the control of the processor; and the processor is used to read the computer program in the memory and perform the following operations:
transmitting first sensing data obtained by the receiver to a transmitter of the sensing signal.

102. The device according to claim 101, wherein the processor further reads the program and performs the following steps:
before transmitting first sensing data obtained by the receiver to a transmitter of the sensing signal, receiving seventh information transmitted by the transmitter, wherein the seventh information is used to request the first sensing data.

103. The device according to claim 101, wherein the processor further reads the program and performs the following steps:
before transmitting first sensing data obtained by the receiver to a transmitter of the sensing signal, receiving third information transmitted by the first network function, wherein the third information is used to instruct the receiver to transmit the first sensing data to the transmitter.

104. A sensing result obtaining device, applied to a receiver of a sensing signal, comprising:
a first transmission unit used to transmit first sensing data obtained by the receiver to a transmitter of the sensing signal.

105. The device according to claim 104, further comprising:
a first receiving unit used to, before transmitting first sensing data obtained by the receiver to a transmitter of the sensing signal, receive seventh information transmitted by the transmitter, wherein the seventh information is used to request the first sensing data.

106. The device according to claim 104, further comprising:
a second receiving unit used to, before transmitting first sensing data obtained by the receiver to a transmitter of the sensing signal, receive third information transmitted by the first network function, wherein the third information is used to instruct the receiver to transmit the first sensing data to the transmitter.

107. A processor-readable storage medium, comprising a computer program stored thereon; wherein the computer program is used to cause a processor to execute the method according to any one of claims 53 to 70.
